# EUROPEAN PATENT APPLICATION

(11) **EP 4 140 697 A1**
(43) Date of publication of application: **01.03.2023**
(21) Application number: 21807547.1
(22) Date of filing: 21.04.2021
(51) Int. Cl.: B29C 64/153, B29C 64/393, B22F 10/366, B22F 10/38

(54) **MANFACTURING QUALITY EVALUATION METHOD FOR ADDITIVE MANUFACTURING, ADDITIVE MANUFACTURING SYSTEM, INFORMATION PROCESSING DEVICE, AND PROGRAM**

(30) Priority: 22.05.2020 WO PCT/JP2020/020406
(71) Applicant: Technology Research Association For Future Additive Manufacturing, Tokyo, 101-0044 (JP)
(72) Inventor: IEDA, Makiko, Hiroshima-shi, Hiroshima 739-2116 (JP); KATO, Chika, Hiroshima-shi, Hiroshima 739-2116 (JP); IKESHOJI, Toshi-Taka, Hiroshima-shi, Hiroshima 739-2116 (JP); KYOGOKU, Hideki, Hiroshima-shi, Hiroshima 739-2116 (JP); TAKESHITA, Koki, Yokohama-shi, Kanagawa 244-8533 (JP)
(74) Representative: TBK
(86) International application number: PCT/JP2021/016154
(87) International publication number: WO 2021/235159

(57) **Abstract**

This invention is directed to a method of efficiently improving a relative density of a shaped object using an evaluation criterion having a higher correlation with a density of an object to be shaped. The method according to this invention includes acquiring three-dimensional point group data of a surface of a shaping object, calculating at least one of three-dimensional surface texture parameters extended to a plane region using the three-dimensional point group data, and evaluating a quality of the object to be shaped using the at least one of the three-dimensional surface texture parameters.

## Description

### TECHNICAL FIELD

The present invention relates to a shaping quality evaluation method in laminating and shaping, a laminating and shaping system, an information processing apparatus, and a program thereof.

### BACKGROUND ART

In the above technical field, patent literature 1 discloses a technique of capturing a shaping surface by a camera in a three-dimensional laminating and shaping apparatus, and controlling the irradiation output value of a laser beam so as to adjust an arithmetic mean height Ra to fall within a predetermined range. Non-patent literature 1 discloses a technique of evaluating, by the arithmetic mean height Ra, surface roughness in laminating and shaping by an aluminum alloy (AlSi10Mg_200C).

### CITATION LIST

### PATENT LITERATURE

Patent literature 1: Japanese Patent Laid-Open No. 2018-003147

### NON-PATENT LITERATURE

Non-patent literature 1: Mohsen Mohammadi, Hamed Asgari, "Achieving low surface rough-ness AlSil0Mg_200C parts using direct metal laser sintering", Additive Manufacturing 20 (2018), 23-32
Non-patent literature 2: ISO 25178-2:2012, "Geometrical product specifications (GPS) - Surface texture: Areal - Part 2: Terms, definitions and surface texture parameters", 2012-04
Non-patent literature 3: JIS B 0681-2:2018 Geometrical product specifications (GPS) - Surface texture: Areal- Part 2: Terms, definitions and surface texture parameters
Non-patent literature 4: David N. Reshef et al., "Detecting Novel Associations in Large Data Sets", American Association for the Advancement of Science, 2011, 1518-1524

### SUMMARY OF THE INVENTION

### TECHNICAL PROBLEM

In the techniques described in the above literatures, however, shaping accuracy is evaluated only by a two-dimensional arithmetic mean height Ra. Then, a correlation between a three-dimensional arithmetic mean height Ra and a shaping density (a density of an object to be shaped) that is important as quality of a laminating and shaping object is not sufficiently high, and it is thus impossible to efficiently improve a shaping quality (a quality of the object to be shaped).

The present invention provides a technique of solving the above-described problem.

### SOLUTION TO PROBLEM

One example aspect of the present invention provides a method of evaluating a quality of an object to be shaped during laminating and shaping, comprising:
acquiring three-dimensional point group data of a surface of a shaping obj ect;
calculating at least one of three-dimensional surface texture parameters extended to a plane region using the three-dimensional point group data in reduced dimension; and
evaluating the quality of the object to be shaped using the at least one of the three-dimensional surface texture parameters.

Another example aspect of the present invention provides an information processing apparatus comprising:
a data acquirer that acquires three-dimensional point group data of a surface of a shaping object;
a parameter calculator that calculates at least one of three-dimensional surface texture parameters extended to a plane region using the three-dimensional point group data in reduced dimension; and
an evaluator that evaluates a quality of the object to be shaped using the at least one of the three-dimensional surface texture parameters.

Still other example aspect of the present invention provides an information processing program for causing a computer to execute a method, the method comprising:
acquiring three-dimensional point group data of a surface of a shaping obj ect;
calculating at least one of three-dimensional surface texture parameters extended to a plane region using the three-dimensional point group data in reduced dimension; and
evaluating a quality of an object to be shaped using the at least one of the three-dimensional surface texture parameters.

Still other example aspect of the present invention provides a laminating and shaping system comprising:
a laminating and shaping apparatus that creates an object by repeating to spread a material powder and irradiate a laser on the spread material powder, and
an information processing apparatus that controls laminating and shaping of the object in the laminating and shaping apparatus,
the information processing apparatus including
a data acquirer that acquires three-dimensional point group data of a surface of a shaping object;
a parameter calculator that calculates at least one of three-dimensional surface texture parameters extended to a plane region using the three-dimensional point group data in reduced dimension;
an evaluator that evaluates a quality of the object to be shaped using the at least one of the three-dimensional surface texture parameters; and
a laser adjuster that instructs, in accordance with an evaluation result of said evaluator, adjustment for at least one of a laser power and a scan speed.

### ADVANTAGEOUS EFFECTS OF INVENTION

According to the present invention, it is possible to efficiently improve the shaping quality since at least one of evaluation criterions having a higher correlation with the shaping density is used.

### BRIEF DESCRIPTION OF DRAWINGS

Fig. 1 is a view for explaining surface texture parameters Ra and Rz according to a technical premise;
Fig. 2 is a table for explaining three-dimensional surface texture parameters usable to predict the relative density of an object to be shaped according to the first example embodiment;
Fig. 3A is a flowchart illustrating a procedure of a quality evaluation method for the object to be shaped according to the first example embodiment;
Fig. 3B is a flowchart illustrating another procedure of the quality evaluation method for the object to be shaped according to the first example embodiment;
Fig. 4A is a view for explaining a laminating and shaping technique according to the second example embodiment;
Fig. 4B is a block diagram showing the arrangement of a laminating and shaping system according to the second example embodiment;
Fig. 4C is a flowchart illustrating the operation procedure of the laminating and shaping system according to the second example embodiment;
Fig. 5 is a block diagram showing the arrangement of an information processing apparatus according to the second example embodiment;
Fig. 6A is a table showing the structure of a shaping quality evaluation table according to the second example embodiment;
Fig. 6B is a graph showing the arrangement of a process map according to the second example embodiment;
Fig. 6C is a table showing the structure of a shaping stop condition table according to the second example embodiment;
Fig. 7A is a flowchart illustrating the processing procedure of the information processing apparatus according to the second example embodiment;
Fig. 7B is a flowchart illustrating the processing procedure of the information processing apparatus according to the second example embodiment;
Fig. 8 is a graph showing the relation between the relative density and the energy density on a surface of a shaping object according to Example 1;
Fig. 9 is a view showing images of surface texture by a three-dimensional optical profiler according to Example 1;
Fig. 10A is a graph showing the relation between the relative density and Sal according to Example 1;
Fig. 10B is a graph showing the relation between the relative density and Sda according to Example 1;
Fig. 10C is a graph showing the relation between the relative density and Sha according to Example 1;
Fig. 10D is a graph showing the relation between the relative density and Sdv according to Example 1;
Fig. 10E is a graph showing the relation between the relative density and Smr2 according to Example 1;
Fig. 10F is a graph showing the relation between the relative density and Sdr according to Example 1;
Fig. 10G is a graph showing the relation between the relative density and Str according to Example 1;
Fig. 11A is a view showing image examples of surface texture by layer monitoring according to Example 2;
Fig. 11B is a view showing images of surface texture by layer monitoring according to Example 2;
Fig. 12A is a graph showing the relation between the relative density and Sal according to Example 2;
Fig. 12B is a graph showing the relation between the relative density and Sda according to Example 2;
Fig. 12C is a graph showing the relation between the relative density and Sha according to Example 2;
Fig. 12D is a graph showing the relation between the relative density and Sdv according to Example 2;
Fig. 12E is a graph showing the relation between the relative density and Smr2 according to Example 2;
Fig. 13A is a graph showing the arrangement of a process map according to Example 3;
Fig. 13B is a graph showing the relation between the energy density and the relative density according to Example 3;
Fig. 13C is a graph showing the arrangement of another process map according to Example 3;
Fig. 14 is a view for explaining measurement of the amount of subduction at the surface according to Example 4;
Fig. 15 is a view showing the result of measurement of the amount of subduction at the surface according to Example 4;
Fig. 16 is a graph showing the correlation result between the relative density and Sz according to Example 4;
Fig. 17 is a view for explaining a method of calculating the amount of subduction at the surface according to Example 4;
Fig. 18 is a graph showing the correlation result between the relative density and the amount of subduction at the surface according to Example 4;
Fig. 19 is a table for explaining three-dimensional surface texture parameters usable to predict the relative density of an object to be shaped according to Example 5;
Fig. 20A is a graph showing the relation between the relative density and Svk according to Example 5;
Fig. 20B is a graph showing the relation between the relative density and Sk according to Example 5;
Fig. 20C is a graph showing the relation between the relative density and Sq according to Example 5;
Fig. 20D is a graph showing the relation between the relative density and Sdq according to Example 5;
Fig. 20E is a graph showing the relation between the relative density and Sxp according to Example 5;
Fig. 20F is a graph showing the relation between the relative density and Vvc according to Example 5;
Fig. 20G is a graph showing the relation between the relative density and Vvv according to Example 5;
Fig. 20H is a graph showing the relation between the relative density and Vm according to Example 5;
Fig. 20I is a graph showing the relation between the relative density and Vmp according to Example 5;
Fig. 20J is a graph showing the relation between the relative density and Vv according to Example 5; and
Fig. 20K is a graph showing the relation between the relative density and Sp according to Example 5.

### DESCRIPTION OF EXAMPLE EMBODIMENTS

Example embodiments of the present invention will now be described in detail with reference to the drawings. It should be noted that the relative arrangement of the components, the numerical expressions and numerical values set forth in these example embodiments do not limit the scope of the present invention unless it is specifically stated otherwise. Note that in this specification, the notation of three-dimensional surface texture parameters representing surface roughness complies with ISO 25178-2:2012.

### [First Example Embodiment]

As one of methods of shaping a three-dimensional shaping object, there is known a powder laminating and shaping method of shaping a shaping object by repeatedly performing an operation of irradiating, with a laser, a predetermined portion of a thin layer of a material powder to melt or sinter the material powder and forming a solidified layer. In this powder laminating and shaping method, the solidified state (molten, sintered, and diffusion bonded states) of the powder changes depending on the heat input amount to the material powder. If an error occurs in the powder amount of the thin layer, the characteristic of the shaping object may change and the shape accuracy may degrade. To solve this problem, for example, in patent literatures 1 and 2, an attempt is made to improve the shape accuracy by calculating the arithmetic mean roughness Ra as one two-dimensional surface texture parameter.

### «Problem of Surface Texture Parameter Used»

However, if sputter generated when melting and solidifying a powder by irradiating the powder with a laser adheres to a shaping surface, or unevenness of the shaping surface increases due to a boring phenomenon, a humping phenomenon, or the like, the shaping quality degrades. Furthermore, if the unevenness further increases, a recoater blade may contact the shaping surface to not only stop shaping halfway but also damage an apparatus component. Since evaluation of such unevenness is mostly performed for a shaped object after the end of shaping, and is often performed by arithmetic mean roughness (for example, Ra), irregular and rough unevenness caused by sputter adhesion or the like cannot be quantified. Therefore, even if the value of the arithmetic mean roughness Ra is the same, the shaping quality such as the shaping density is not always high.

The shaping density that is important for shaping quality of a three-dimensional shaping object is tested after producing the shaped object, thereby eliminating a defective object. Alternatively, the heat input amount to the material powder may be changed to perform a test, and then the appropriate heat input amount may be selected to perform shaping. However, it is impossible to control the shaping parameter by predicting the density of the object to be shaped in real time during laminating and shaping.

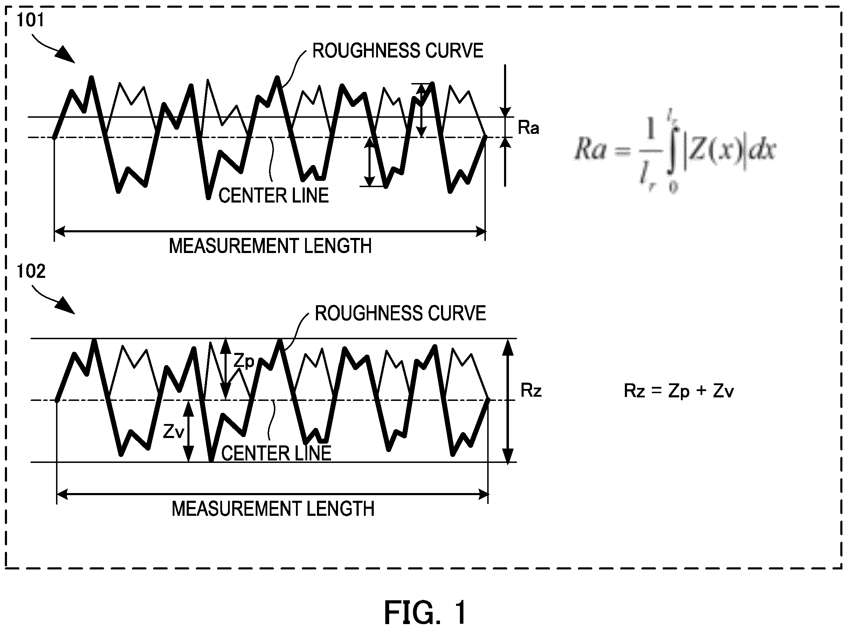

Fig. 1 is a view for explaining calculation 101 of arithmetic mean roughness (for example, Ra) and calculation 102 of maximum height (for example, Rz), each of which has a relatively low correlation with the density of the object to be shaped. Note that Zp represents the maximum height value of hills of a contour curve within a reference length, and Zv represents the maximum depth value of dales of the contour curve within the reference length.

### <<Three-Dimensional Surface Texture Parameters Used in This Example Embodiment>>

The present inventor has found that the positive correlation with the shaping density can be obtained using a three-dimensional surface texture parameter, and used to evaluate the shaping quality. Examples of the calculated three-dimensional surface texture parameter are, for example, an autocorrelation length Sal representing the minimum period of unevenness based on an autocorrelation function, a mean dale area Sda, a mean hill area Sha, a mean dale volume Sdv, and a material ratio Smr2 for separating a dale portion and a core portion. Then, if it is determined, based on the value of the calculated three-dimensional surface texture parameter, that the shaping quality may degrade, it is possible to continue shaping by appropriately selecting and changing a laser irradiation condition. It is possible to select whether to continue or stop shaping while determining the shaping quality in real time by using the three-dimensional surface texture parameter calculated from three-dimensional point group data of each layer acquired during shaping. If it is determined, based on the calculated value of the three-dimensional surface texture parameter, that an apparatus component such as a recoater blade may contact a surface of a shaping object to be damaged, control is executed to stop shaping. That is, in this example embodiment, the dimensionality of the three-dimensional point group data of the surface is reduced to calculate at least one of three-dimensional surface texture parameters extended to a plane region, and the quality of the object to be shaped is evaluated using the three-dimensional surface texture parameter. Note that the three-dimensional surface texture parameter is calculated based on, for example, a value in an axial direction perpendicular to the surface.

Furthermore, a development interfacial area ratio Sdr, a texture aspect ratio Str, and the like each of which has a negative correlation with the density of the object to be shaped are usable.

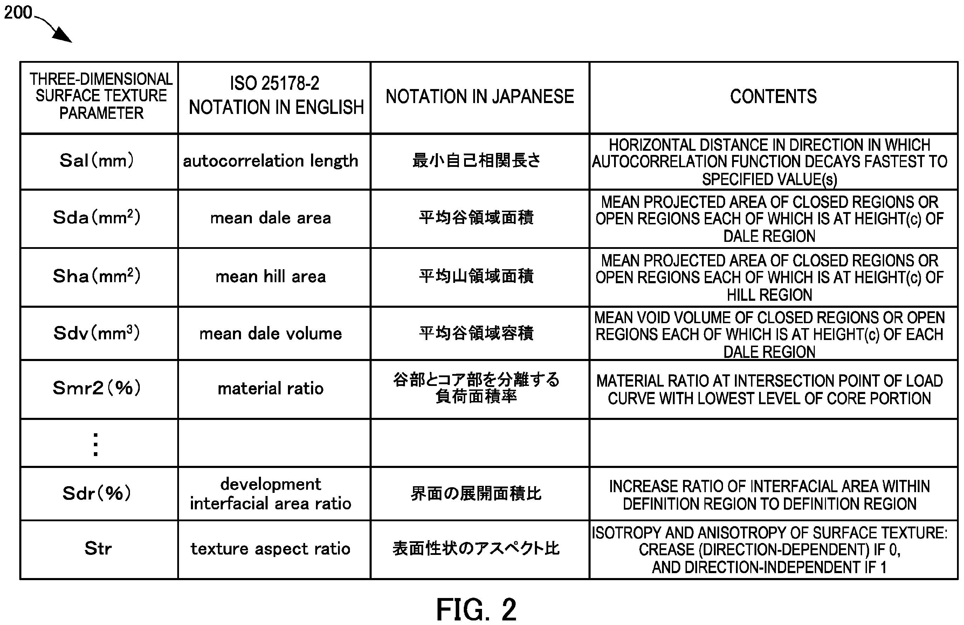

Fig. 2 shows the three-dimensional surface texture parameters used in this example embodiment. The notation in Fig. 2 complies with ISO 25178-2 of non-patent literature 2. Note that in this example embodiment, the correlation between each three-dimensional surface texture parameter and the relative density of the object to be shaped is shown. However, the correlation with the density of the object to be shaped can further be improved by combining a plurality of three-dimensional surface texture parameters. For example, the positive and negative correlations with the density of the object to be shaped may be combined.

### <Density Evaluation by Three-Dimensional Surface Texture Parameter)

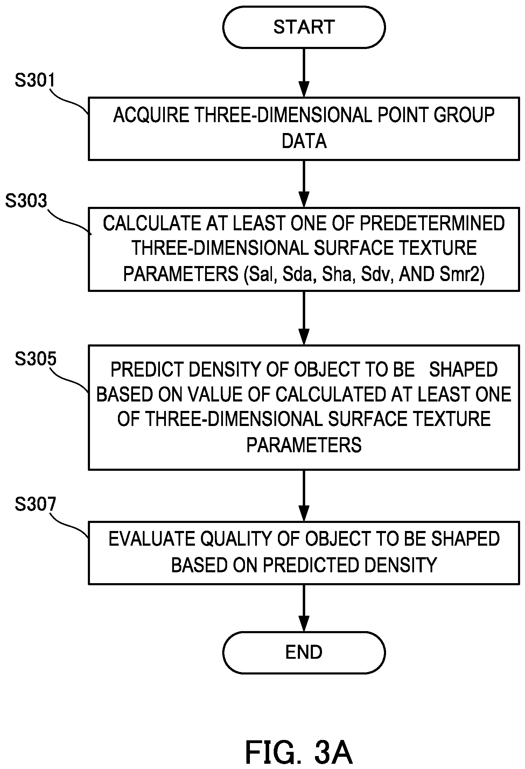

Fig. 3A is a flowchart illustrating a procedure of a quality evaluation method for an object to be shaped according to this example embodiment.

In quality evaluation of the object to be shaped, in step S301, three-dimensional point group data is acquired. The three-dimensional point group data in this example embodiment is obtained by capturing, by a camera, a surface of the shaped object, a surface of each shaped layer, or a surface of the powder bed of each layer when laminating and shaping the object, and representing each point on the surface by (x, y) coordinates and a z coordinate in the height direction.

In step S303, at least one of three-dimensional surface texture parameters is calculated from the acquired three-dimensional point group data. At this time, the three-dimensional surface texture parameters are parameters for representing surface roughness defined in the international standard (ISO 25178: see non-patent literature 2). In this example embodiment, the autocorrelation lengths Sal, Sda, Sha, Sdv, and Smr2 are selected as the three-dimensional surface texture parameters preferable to predict the relative density of the object to be shaped from the surface texture during laminating and shaping.

In step S305, a relative density as the density of the object to be shaped is predicted based on the calculated at least one of three-dimensional surface texture parameters. Note that the correlation between the value of each calculated three-dimensional surface texture parameter and the relative density of the shaped object is stored based on the value of each three-dimensional surface texture parameter during or after shaping and the relative density measured from the laminated and shaped object.

In step S307, the shaping quality (the quality of the object to be shaped) is evaluated based on the relative density predicted based on at least one of the three-dimensional surface texture parameters. The predicted value of the relative density is used to evaluate whether the relative density of the shaped object after shaping is a desired density. If it is predicted that the predicted value of the relative density is smaller than the desired density required by the shaped object, it may be used to adjust the shaping conditions, especially, an energy density determined by the laser power or/and the scan speed. In this case, it is desirable to prepare a process map of the relative density by a combination of the laser power and the scan speed and select an adjustment method of the combination.

According to this example embodiment, since an evaluation criterion having a higher correlation with the relative density of the object to be shaped is used, it is possible to efficiently improve the quality of the object to be shaped. That is, surface texture parameters each having a high correlation with an internal defect are found from the surface texture parameters of the surface of the shaping object, and by using the found surface texture parameters as evaluation indices, the density of the object to be shaped is estimated from the point group data of the surface of the shaping object acquired during laminating and shaping, thereby being able to predict a defect of the shaped object.

### <Density Evaluation by Amount of Subduction at Surface>

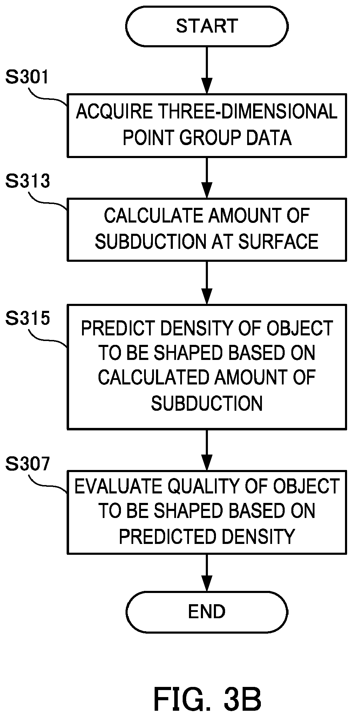

Fig. 3B is a flowchart illustrating another procedure of the quality evaluation method for the laminating and shaping object according to this example embodiment. Fig. 3B shows the procedure of relative density evaluation by the amount of subduction at the surface. As the amount of subduction at the surface of a shaping portion that has been molten and solidified by a laser is larger from an amount at a surface of a portion that has not been molten and solidified, a void in the shaping object is smaller and thus the relative density can be predicted to be higher. Note that in Fig. 3B, the same step numbers as in Fig. 3A denote the same steps and a repetitive description thereof will be omitted.

In step S313, the amount of subduction at the surface of the shaping portion is calculated from the acquired three-dimensional point group data. The amount of subduction at the surface can be obtained as, for example, the maximum depth of dales below the mean height of a powder dispersion surface. Alternatively, the amount of subduction at the surface can be obtained as a mean depth by deleting the excessively deep dale. To reduce the calculation amount, the amount of subduction at the surface may be a dale area or mean depth calculated from one section in one direction.

In step S315, the relative density of the object to be shaped is predicted based on the calculated amount of subduction at the surface. Note that the correlation between the calculated amount of subduction at the surface and the relative density of the shaped object is stored based on the amount of subduction at the surface during or after shaping and the relative density measured from the laminated and shaped object, in consideration of the parameters such as the kind of shaping materials and the shaping conditions.

Note that the above example embodiment has individually explained prediction of the relative density based on the surface texture parameters and prediction of the relative density based on the amount of subduction at the surface. However, both the prediction processes using the three-dimensional surface texture parameters and the amount of subduction at the surface may be combined or one prediction processing may be complemented by another prediction processing, thereby making it possible to improve the reliability of prediction of the relative density.

### [Second Example Embodiment]

A laminating and shaping apparatus according to the second example embodiment, that uses the three-dimensional surface texture parameters of the first example embodiment, will be described next.

### <Prospect of Laminating and Shaping Technique>

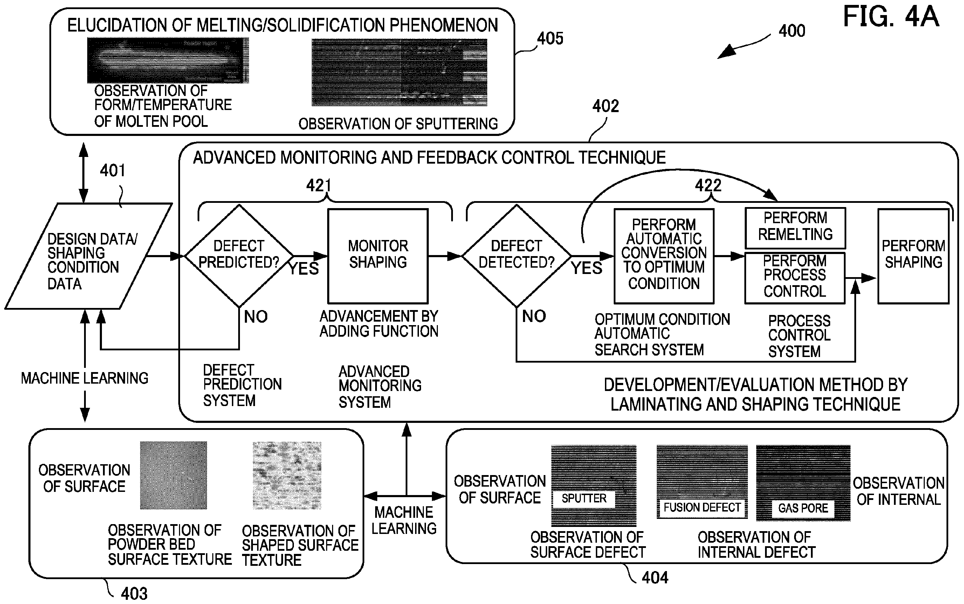

Fig. 4A is a view for explaining a laminating and shaping technique 400 according to this example embodiment.

As the laminating and shaping technique 400, a design data/shaping condition data generation technique 401 and an advanced monitoring and feedback control technique 402 are researched and developed to laminate and shape a high-quality shaping object accurately.

To improve these techniques, observation of surface 403 at the time of laminating and shaping and after shaping, observation of surface defect/internal defect 404 of a laminating and shaping object, and elucidation of a melting/solidification phenomenon 405 are performed. The surface observation 403 includes observation of a powder bed surface texture and observation of a shaping surface texture. The elucidation of melting/solidification phenomenon 405 includes observation of the form and temperature of a molten pool and observation of sputtering. The advanced monitoring and feedback control technique 402 includes processing 421 with defect prediction and processing 422 with actual defect detection based on machine learning of an observation result or elucidation result.

Calculation of the three-dimensional surface texture parameters according to this example embodiment is a technique related to the observation of surface 403 at the time of laminating and shaping and after shaping. Then, in the observation of surface 403 at the time of laminating and shaping and after shaping, feedback is statically performed to the design data/shaping condition data generation technique 401, thereby contributing to improvement of the technique. Furthermore, in this example embodiment, defect prediction by the observation of surface 403 at the time of laminating and shaping and after shaping can be associated with real-time optimum condition automatic conversion at the time of laminating and shaping. In particular, as defect prediction, the shaping density that is important as the quality of the laminating and shaping object is predicted, and optimum condition automatic conversion is performed so that the relative density of the shaping object falls within a predetermined range (in general, 99.0% or higher, or even higher depending on the type of the shaping object).

Note that as parameters largely influencing the relative density of the shaping object, there are the energy density of a molten surface and parameters associated with a laser power, a scan speed, a hatch distance, and a laminating pitch. In this example embodiment, it is possible to predict the shaping density of the shaping object based on the texture observation of the powder bed surface and the shaping surface during laminating and shaping, and optimally control the laser power and the scan speed, thereby improving the shaping quality.

### <Laminating and Shaping System>

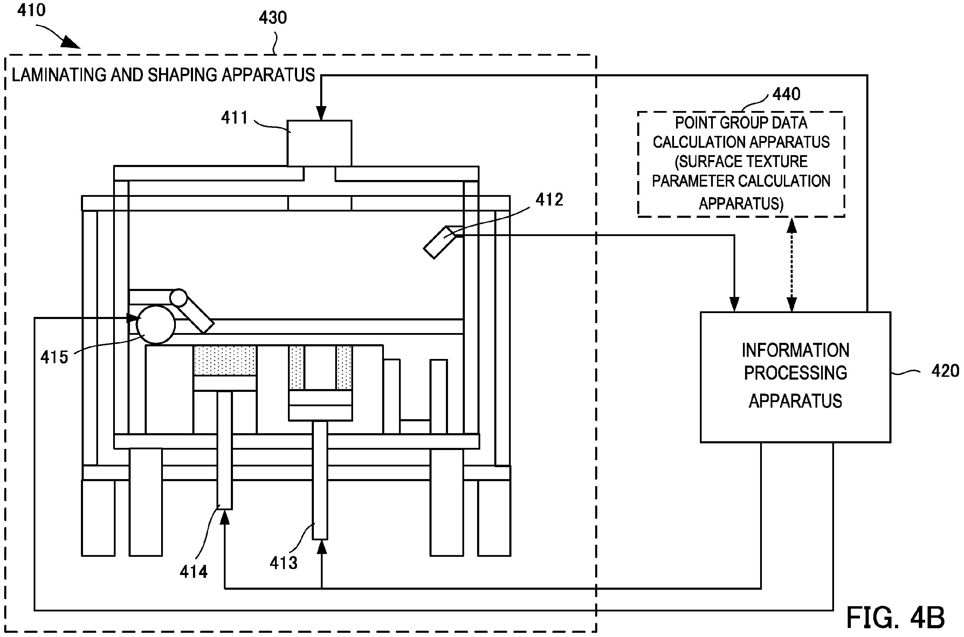

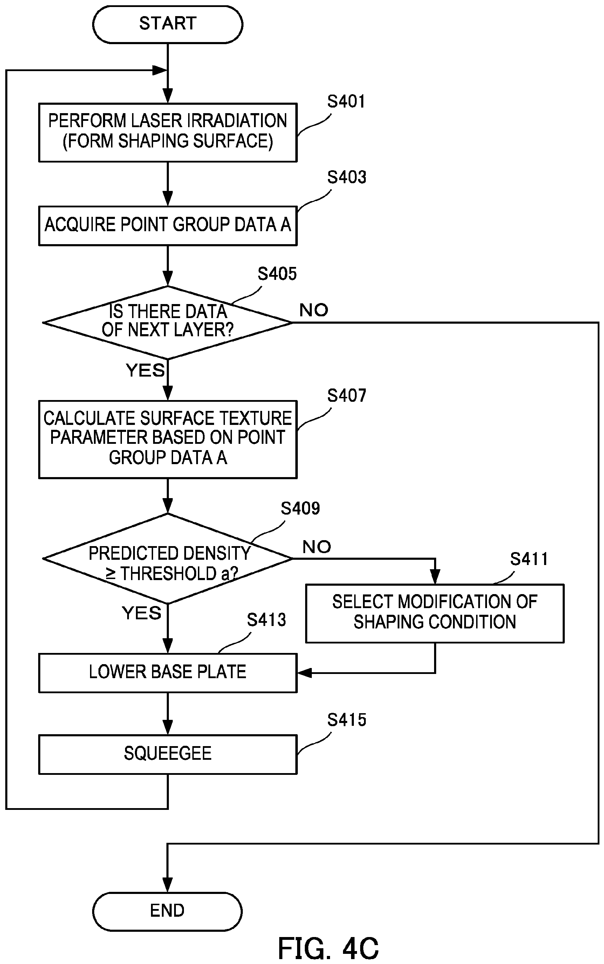

The arrangement and operation of a laminating and shaping system 410 according to this example embodiment will be described with reference to Figs. 4B and 4C.

### (Arrangement of System)

Fig. 4B is a block diagram showing the arrangement of the laminating and shaping system 410 according to this example embodiment.

The laminating and shaping system 410 includes an information processing apparatus 420 and a laminating and shaping apparatus 430. Note that the information processing apparatus 420 may be mounted in the laminating and shaping apparatus 430 and they may be implemented as one apparatus. Alternatively, the information processing apparatus 420 may be divided into a plurality of processing functions and implemented as a plurality of apparatuses.

The laminating and shaping apparatus 430 includes a laser irradiation unit 411 that oscillates while scanning a laser for melting a material powder spread over the shaping surface and solidifying a shaping object, and a camera 412 that captures the powder bed surface and the shaping surface. The laminating and shaping apparatus 430 further includes a shaping table 413 on which the shaping object is laminated and shaped, and powder laminating mechanisms 414 and 415 that spread the material powder over the shaping surface. Note that with respect to the laminating and shaping apparatus 430 shown in Fig. 4B, a portion related to control by the information processing apparatus 420 according to this example embodiment will be described and a description of the remaining portion will be omitted.

The information processing apparatus 420 controls shaping of a laminating and shaping object in the laminating and shaping apparatus 430. In this example embodiment, the information processing apparatus 420 acquires image data of the powder bed surface or the shaping surface captured by the camera 412 during laminating and shaping, and generates three-dimensional point group data. Next, based on the three-dimensional point group data within a shaping range, the information processing apparatus 420 calculates at least one of three-dimensional surface texture parameters with which the shaping density of the object to be shaped can be predicted. Next, using at least one of the calculated three-dimensional surface texture parameters, the information processing apparatus 420 predicts the shaping density based on the correlation, learned in advance, between the shaping density and the at least one three-dimensional surface texture parameter. Then, the information processing apparatus 420 determines whether the shaping density satisfies the quality criterion of the object to be shaped. If the quality criterion of the object to be shaped is not likely satisfied or is not satisfied at a high probability without changing energy density, a laser adjuster adjusts the energy density of the molten surface so as to increase the shaping density. The energy density is adjusted using the laser power and/or the scan speed in combination.

Note that the three-dimensional point group data may optionally be calculated by a point group data calculation apparatus 440 and the information processing apparatus 420 acquires the calculated three-dimensional point group data from the point group data calculation apparatus 440. Furthermore, to shorten the calculation time, the three-dimensional surface texture parameter may be calculated at high speed by other apparatus outside the information processing apparatus 420.

Control of the shaping table 413 on which the object is laminated and shaped and the powder laminating mechanisms 414 and 415 that spread the material powder over the shaping surface influences the shaping density. However, but this control is basically preset as design data or shaping condition data in many cases, and thus the descriptions of this control is omitted. For example, the thickness of one layer or the density of the spread material powder may be controlled.

### (Operation Procedure)

Fig. 4C is a flowchart illustrating the operation procedure of the laminating and shaping system 410 according to this example embodiment.

In step S401, the laminating and shaping system 410 irradiates, with the laser from the laser irradiation unit 411, the material powder spread over the shaping surface, thereby forming the shaping surface of one layer. In step S403, the laminating and shaping system 410 acquires (generates) three-dimensional point group data of the shaping surface. In step S405, the laminating and shaping system 410 determines whether there is data of the next layer. If there is no data of the next layer, the laminating and shaping system 410 ends the processing.

If there is data of the next layer, the laminating and shaping system 410 calculates, in step S407, based on the three-dimensional point group data, a three-dimensional surface texture parameter with which the relative density of the object to be shaped as the shaping density can be evaluated. In step S409, the laminating and shaping system 410 determines whether the relative density evaluated based on the calculated three-dimensional surface texture parameter is equal to or higher than a threshold a. If the relative density is lower than the threshold a, the laminating and shaping system 410 selects, in step S411, with reference to the process map prepared in advance, modification of the shaping condition (in this example embodiment, the energy density of the molten surface by a combination of the laser power and the scan speed) to increase the relative density.

If the relative density is equal to or higher than the threshold a, the laminating and shaping system 410 lowers, in step S413, the shaping table (base plate) 413 by a predetermined distance corresponding to the thickness of one layer. Then, in step S415, the laminating and shaping system 410 squeegees and spreads the material powder over the shaping surface.

### <Information Processing Apparatus>

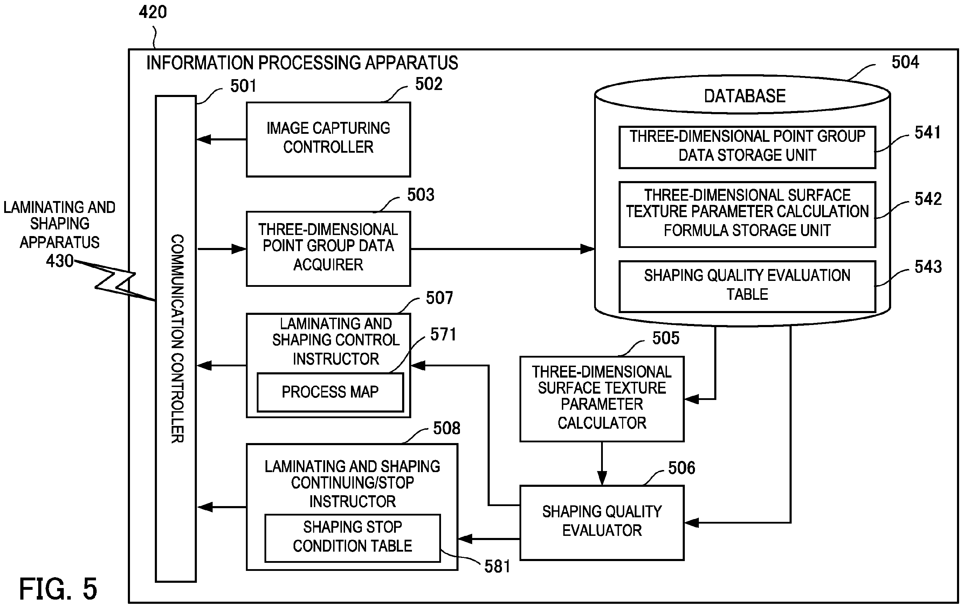

The arrangement and operation of the information processing apparatus 420 according to this example embodiment will be described with reference to Figs. 5 to 7B.

### (Arrangement)

Fig. 5 is a block diagram showing the arrangement of the information processing apparatus 420 according to this example embodiment.

The information processing apparatus 420 includes a communication controller 501, an image capturing controller 502, a three-dimensional point group data acquirer 503, a database 504, a three-dimensional surface texture parameter calculator 505, a shaping quality evaluator 506, a laminating and shaping control instructor 507, and a laminating and shaping continuing/stop instructor 508. Note that in the information processing apparatus 420 shown in Fig. 5, functional components related to this example embodiment are illustrated, and other control functions associated with laminating and shaping and other functions implemented by a general-purpose computer are not illustrated. For example, a display unit that transmits design data or shaping condition data, receives the state of laminating and shaping, or makes a notification of the state of laminating and shaping, an instructor used by an operator to input an instruction, and the like are provided.

The communication controller 501 controls wired or wireless communication with the laminating and shaping apparatus 430. The image capturing controller 502 controls image capturing of the shaping surface or the powder bed surface by the camera 412. The three-dimensional point group data acquirer 503 acquires three-dimensional point group data extracted from the image of the shaping surface or the powder bed surface captured by the camera 412. Note that the three-dimensional point group data may be acquired from an external apparatus or may be generated by the three-dimensional point group data acquirer 503. The three-dimensional point group data is stored in the database 504.

The database 504 includes a three-dimensional point group data storage unit 541, a three-dimensional surface texture parameter calculation formula storage unit 542, and a shaping quality evaluation table 543. The three-dimensional point group data storage unit 541 stores the three-dimensional point group data from the three-dimensional point group data acquirer 503. If the history of the three-dimensional point group data is used, the data is stored together with a time stamp. The three-dimensional surface texture parameter calculation formula storage unit 542 stores a three-dimensional surface texture parameter calculation algorithm by using each three-dimensional surface texture parameter as an identifier. The shaping quality evaluation table 543 stores a table that is prepared in advance and used to predict the shaping density from the calculated value of the three-dimensional surface texture parameter. The shaping quality evaluation table 543 also stores a table for evaluating the shaping quality based on the predicted shaping density.

The three-dimensional surface texture parameter calculator 505 calculates the three-dimensional surface texture parameter by the formula stored in the three-dimensional surface texture parameter calculation formula storage unit 542 using the three-dimensional point group data stored in the three-dimensional point group data storage unit 541. The shaping quality evaluator 506 predicts the relative density of the object to be shaped as the shaping density from the three-dimensional surface texture parameter of the surface of the shaping object as the shaping surface or the powder bed surface calculated by the three-dimensional surface texture parameter calculator 505 with reference to the shaping quality evaluation table 543, thereby evaluating the shaping quality of the shaping object based on the predicted shaping density.

The laminating and shaping control instructor 507 includes a process map 571, and instructs, based on the evaluation result of the shaping quality by the shaping quality evaluator 506 using the process map 571, the laminating and shaping apparatus 430 to perform shaping control. That is, if it is determined that the shaping quality is lower than requested quality or is likely to degrade, control to improve the shaping quality is instructed. In this example embodiment, to improve the shaping density, the scan speed and the laser power are adjusted to adjust the energy density of the molten surface.

The laminating and shaping continuing/stop instructor 508 includes a shaping stop condition table 581. If the shaping quality that satisfies a shaping stop condition in the shaping stop condition table 581 is evaluated, a laminating and shaping stop instruction is issued. If the shaping stop condition is not satisfied, laminating and shaping is continued.

### (Shaping Quality Evaluation Table)

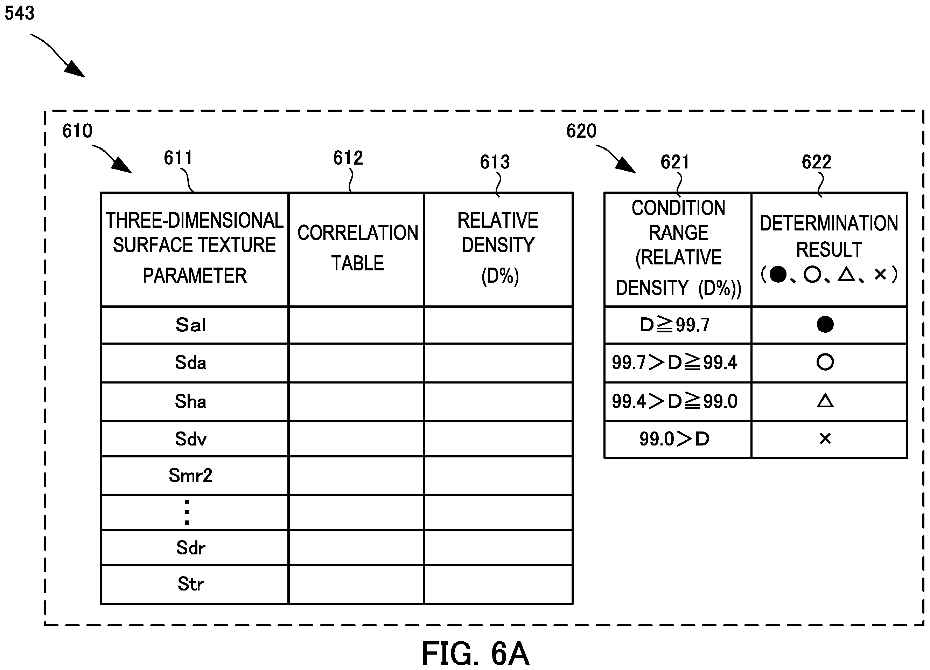

Fig. 6A is a table showing the structure of the shaping quality evaluation table 543 according to this example embodiment. The shaping quality evaluation table 543 is used by the shaping quality evaluator 506 to predict the relative density as the shaping density from the three-dimensional surface texture parameter and evaluate the shaping quality based on the predicted relative density.

The shaping quality evaluation table 543 includes a relative density prediction table 610 for predicting the relative density from the three-dimensional surface texture parameter, and a shaping quality determination table 620 for determining the shaping quality based on the predicted relative density. The relative density prediction table 610 stores, in association with a calculated three-dimensional surface texture parameter 611, a correlation table 612 that holds the correlation between the three-dimensional surface texture parameter and the relative density, and a relative density 613 predicted using the correlation table 612. The shaping quality determination table 620 stores a condition range 621 for determining the shaping quality based on the predicted relative density and shaping quality as a determination result 622 corresponding to each condition range 621.

In the shaping quality 622, "●" represents high quality of a relative density of 99.7% or higher, "O" represents good quality of a relative density falling within a range from 99.4% (inclusive) to 99.7% (exclusive), and "Δ" represents fine quality of a relative density falling within a range from 99.0% (inclusive) to 99.4% (exclusive). Then, "×" represents low quality of a relative density lower than 99.0%. However, the determination criterion of the shaping quality based on the relative density changes depending on the application purpose of the laminating and shaping object, and is thus not limited to the above one.

### (Process Map)

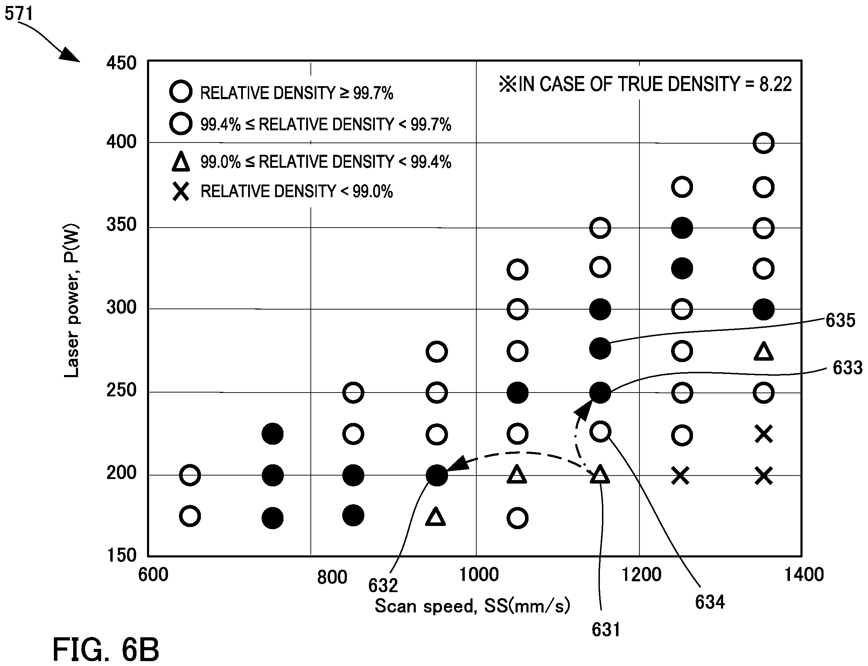

Fig. 6B is a graph showing the arrangement of the process map 571 according to this example embodiment. The process map 571 is used by the laminating and shaping control instructor 507 to execute control to improve the shaping quality determined based on the predicted relative density or to prevent the shaping quality from degrading.

The process map 571 is a map generated from the shaping quality determination results 622 (corresponding to the shaping quality in Fig. 6A) of the shaping quality evaluator 506 based on the three-dimensional surface texture parameters at the time of laminating and shaping by known combinations of laser powers and scan speeds. In Fig. 6B, the horizontal axis represents the scan speed and the vertical axis represents the laser power.

The process map 571 is prepared and stored in advance, and control of the scan speed and the laser power is instructed to improve the relative density or prevent deterioration of the relative density based on the shaping quality determination result based on the three-dimensional surface texture parameter at the time of actual laminating and shaping.

If, for example, the shaping quality determination result is "Δ" 631, it is desirable to control the scan speed and the laser power for "●" the distance of which is short around "Δ" 631. Since it is complicated to adjust both the scan speed and the laser power, a decrease ("●" 632) in the scan speed in a direction of a broken arrow and an increase ("●" 633) in the laser power in a direction of a one-dot dashed arrow are candidates. If the shaping quality determination result is "O" 634, it is highly likely impossible to obtain "●" by adjusting only the scan speed, and thus the laser power is increased. In this case, for example, by increasing the laser power not to "●" 633 but to "●" 635, the relative density is estimated to be stabilized more.

As compared with control by the value of the energy density of the molten surface calculated from the value of the laser power, the value of the scan speed, and the like, the use of the process map 571 makes it possible to increase the relative density in the actual laminating and shaping environment influenced by an apparatus environment, the peripheral environment of the apparatus, the state of the material powder, and the like, thereby efficiently improving the shaping quality.

### (Shaping Stop Condition Table)

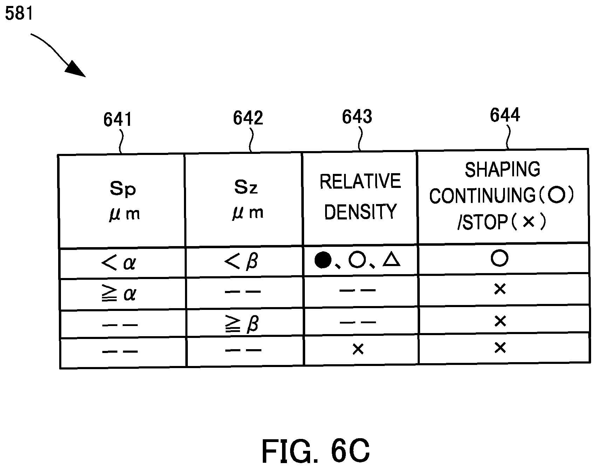

Fig. 6C is a table showing the structure of the shaping stop condition table 581 according to this example embodiment. The shaping stop condition table 581 is used by the laminating and shaping continuing/stop instructor 508 to determine whether to continue or stop laminating and shaping of the laminating and shaping apparatus 430.

The shaping stop condition table 581 stores a shaping stop condition 641 by a maximum peak height Sp (the maximum peak height of the surface at each point of the entire shaping enable region) of the surface as a three-dimensional surface texture parameter, and a shaping stop condition 642 by a maximum height Sz. Then, the shaping stop condition table 581 stores a shaping stop condition 643 of the relative density, and a determination result 644 that indicates shaping stop (×) if one of the shaping stop conditions is satisfied. If Sp is equal to or larger than a threshold α, the recoater blade may contact the shaping surface and thus shaping is stopped, or a component may be damaged. If Sz is equal to or larger than a threshold β, the recoater blade may contact the shaping surface and thus shaping is stopped, or a component may be damaged. Note that with respect to the shaping stop condition 643 of the relative density, if ●, O, or Δ is determined, shaping is continued, and if × is determined, shaping is stopped. However, these changes depending on the quality level required for the shaping object.

For example, there is an example in which when Sp is 394.4 µm and Sz is 502.1 µm, the recoater blade contacts the shaping surface. Thus, it is considered that the threshold α of Sp is set to 350 µm and the threshold β of Sz is set to 500 µm.

### (Processing Procedure)

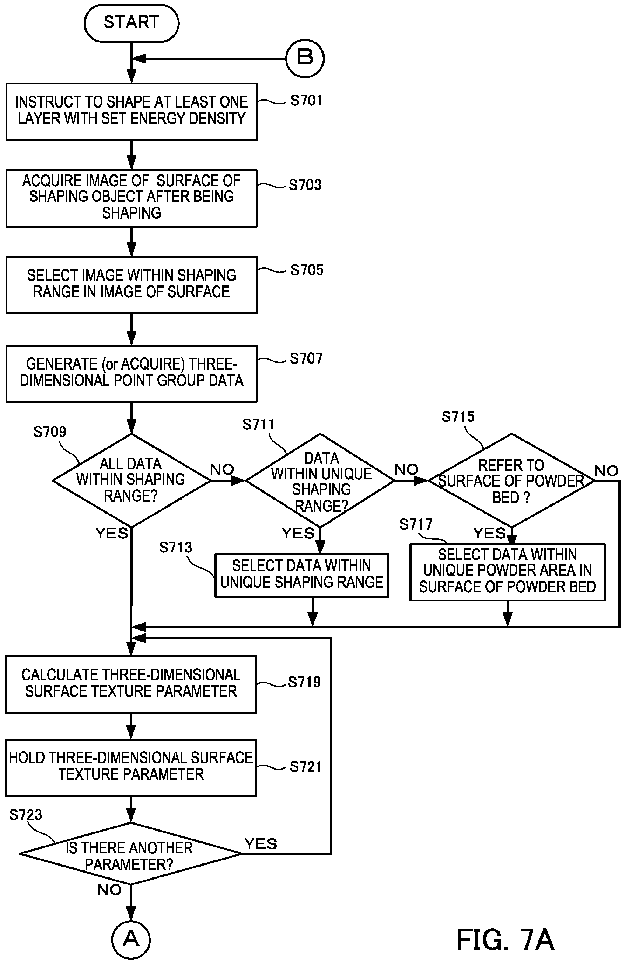

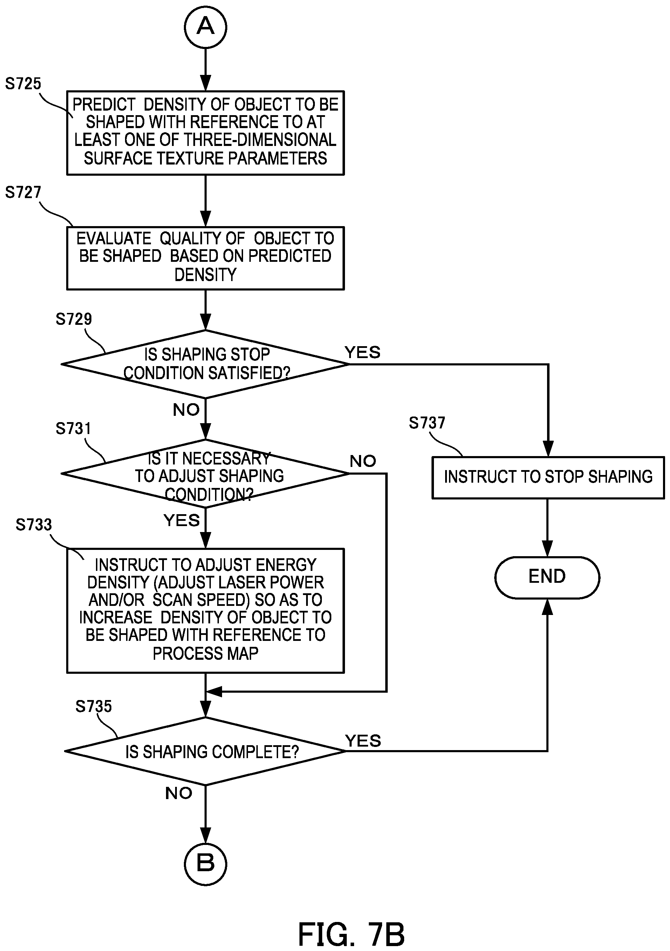

Figs. 7A and 7B are flowcharts illustrating the processing procedure of the information processing apparatus 420 according to this example embodiment. The flowcharts implement the components shown in Fig. 5 when executed by the CPU (Central Processing Unit) of the information processing apparatus 420 using a RAM (Random Access Memory).

In step S701, the information processing apparatus 420 instructs the laminating and shaping apparatus 430 to shape at least one layer with the set energy density (laser power and scan speed). Note that the first layer is initially set by a laminating and shaping target. In step S703, the information processing apparatus 420 acquires, from the camera 412, an image of the shaping surface after shaping. In step S705, the information processing apparatus 420 selects an image within a shaping range in the image of the shaping surface. The information processing apparatus 420 knows the shaping range from the shaping data. In step S707, the information processing apparatus 420 generates three-dimensional point group data from the image within the shaping range. Note that if an external apparatus generates three-dimensional point group data, the information processing apparatus 420 acquires the data from the external apparatus.

In step S709, the information processing apparatus 420 determines whether to calculate the three-dimensional surface texture parameter using all the three-dimensional point group data within the shaping range. If all the three-dimensional point group data within the shaping range are used, the information processing apparatus 420 advances to step S719.

If not all the three-dimensional point group data within the shaping range are used, the information processing apparatus 420 determines, in step S711, whether to use the three-dimensional point group data within a unique shaping range in the shaping range. The unique shaping range indicates a range having a feature different from other range in the shaping range or a range where an abnormality is found in previous laminating in the shaping history. If the three-dimensional point group data within the unique shaping range are used, the information processing apparatus 420 selects, in step S713, the three-dimensional point group data within the unique shaping range. If the three-dimensional point group data within the unique shaping range are not used, the information processing apparatus 420 determines, in step S715, whether to refer to the image of the surface of the powder bed before the current shaping processing to select the three-dimensional point group data to be used to calculate the three-dimensional surface texture parameter. If the image of the surface of the powder bed is referred to, the information processing apparatus 420 selects, in step S717, the three-dimensional point group data within a unique powder area in the image of the surface of the powder bed. The unique powder area indicates an area where the surface of the powder bed is slightly depressed or raised. It is considered that the abnormalities on the surface of the powder bed affect even after shaping. Note that the processes in steps S711 to S717 are processes that are intended to shorten the time taken to calculate the three-dimensional surface texture parameter from the three-dimensional point group data. Therefore, the processes in steps S711 to S717 may be omitted if the external apparatus can calculate the three-dimensional surface texture parameter at high speed or if the information processing apparatus 420 has the performance of calculating the three-dimensional surface texture parameter at high speed.

In step S719, the information processing apparatus 420 calculates the three-dimensional surface texture parameter from the three-dimensional point group data within the selected range or area. Then, in step S721, the information processing apparatus 420 holds the calculated three-dimensional surface texture parameter. In step S723, the information processing apparatus 420 determines whether there is another three-dimensional surface texture parameter to be calculated. If there is the other three-dimensional surface texture parameter to be calculated, the information processing apparatus 420 returns to step S719, and repeats calculation of the three-dimensional surface texture parameter. Note that if the three-dimensional point group data to be used is different depending on the three-dimensional surface texture parameter, the process may return to step S709.

In step S725, the information processing apparatus 420 predicts the density of the object to be shaped with reference to at least one calculated three-dimensional surface texture parameter. In step S727, the information processing apparatus 420 evaluates the quality of the object to be shaped based on the predicted density. In step S729, with reference to the shaping stop condition table 581, the information processing apparatus 420 determines whether to stop shaping. If the shaping stop condition is satisfied, the information processing apparatus 420 instructs, in step S737, the laminating and shaping apparatus 430 to stop shaping, thereby ending the processing. On the other hand, if the shaping stop condition is not satisfied, the information processing apparatus 420 determines, in step S731, whether it is necessary to adjust the shaping condition, especially, the energy density. If it is necessary to adjust the shaping condition, the information processing apparatus 420 instructs, in step S733, the laminating and shaping apparatus 430 to adjust the energy density (adjust laser power and/or scan speed) so as to increase the density of the object to be shaped and then obtain the target shaping quality with reference to the process map 571. In step S735, the information processing apparatus 420 determines whether shaping the object is complete. If shaping the object is incomplete, the information processing apparatus 420 returns to step S701, and repeats shaping of the next and subsequent layers. If shaping the object is complete, the information processing apparatus 420 ends the shaping processing.

According to this example embodiment, surface texture parameters each having a high correlation with an internal defect are found from the surface texture parameters of the shaping object, and are used as evaluation indices (or the definition of a method of representing unevenness by the parameters) to estimate, during shaping, the density from the point group data (unevenness information) of the shaping surface acquired during shaping, thereby predicting a defect. It is possible to produce the shaping object with a high density and less defects by performing shaping while changing the shaping condition in real time based on the estimated density.

It is possible to avoid the recoater blade from contacting the shaping surface to cause damage even if a rough convex shape is generated on the shaping surface. Even if it is determined that the rough convex shape is generated on the shaping surface to likely degrade the shaping quality, it is possible to continue shaping while modifying the laser irradiation condition. It is possible to perform shaping even if there is a component shape for which the laser irradiation condition has not been confirmed.

Note that in this example embodiment, the shaping quality (relative density) is predicted based on the amount of subduction at the surface of the shaping portion. However, it is also possible to predict the shaping quality (relative density) based on the value in the axial direction perpendicular to the powder bed surface. Furthermore, the laminating and shaping apparatus according to the second example embodiment uses the three-dimensional surface texture parameter. However, a laminating and shaping apparatus that uses the amount of subduction at the surface of the shaping portion or uses the three-dimensional surface texture parameter and the amount of subduction at the surface in combination is also possible, thereby allowing more accurate quality management.

### Examples

### <Example 1>

The relative density of each shaping test sample and the three-dimensional surface texture parameters according to this example embodiment when the energy density of a shaping surface was changed were calculated from an image of surface texture by a three-dimensional optical profiler.

### (Shaping Test Sample)

In this example, a test piece shaped for a test was a cube (10 mm × 10 mm × 10 mm), and a laminating pitch was 0.05 mm. Furthermore, a hatch distance (hatch pitch) was 0.10 mm.

### (Surface Texture Measurement Method)

With respect to the outermost surface (upper surface) of the test piece after laminating and shaping, three-dimensional surface texture was measured as point group data in an optical noncontact manner, and the three-dimensional surface texture parameters defined in ISO 25178-2 were calculated using the measured three-dimensional point group data. A three-dimensional optical profiler NewView 9000 (by Zygo) was used as a measuring apparatus. The resolution of a surface image was given by x, y = 0.95 µm and z = 0.01 nm.

### (Relative Density Measurement Method: Archimedes Method)

After the laminated and shaped test piece was removed from the base plate and a support was removed, the density was measured by the Archimedes method. With respect to the measured density, the relative density was calculated by setting the true density to 8.15 g/cm³. As a specific gravity measuring apparatus, Analytical Balance AP224X and Specific Gravity Measurement Kit SMK-601 (by Shimadzu) were used.

Table 1 shows the relative density and the energy density of the shaping surface as a result, and the evaluation result.

**Table 1**

| | Laser Power W | Scan Speed mm/s | Hatch Distance mm | Lamination Thickness mm | Energy Density J/mm³ | Relative Density % | Determination |
|---|---|---|---|---|---|---|---|
| | P(W) | SS | dy | dz | E | RD | |
| Example 101 | 250 | 1050 | 0.1 | 0.05 | 47.6 | 99.75 | ● |
| Example 102 | 250 | 1150 | 0.1 | 0.05 | 43.5 | 99.83 | ● |
| Example 103 | 275 | 1150 | 0.1 | 0.05 | 47.8 | 99.77 | ● |
| Example 104 | 300 | 1150 | 0.1 | 0.05 | 52.2 | 99.78 | ● |
| Example 105 | 325 | 1250 | 0.1 | 0.05 | 52 | 99.73 | ● |
| Example 106 | 225 | 1050 | 0.1 | 0.05 | 42.9 | 99.64 | ○ |
| Example 107 | 225 | 1150 | 0.1 | 0.05 | 39.1 | 99.61 | ○ |
| Example 108 | 225 | 1250 | 0.1 | 0.05 | 36 | 99.45 | ○ |
| Example 109 | 250 | 1250 | 0.1 | 0.05 | 40 | 99.63 | ○ |
| Example 110 | 250 | 1350 | 0.1 | 0.05 | 37 | 99.45 | ○ |
| Example 111 | 275 | 1050 | 0.1 | 0.05 | 52.4 | 99.65 | ○ |
| Example 112 | 275 | 1250 | 0.1 | 0.05 | 44 | 99.65 | ○ |
| Example 113 | 300 | 1050 | 0.1 | 0.05 | 57.1 | 99.57 | ○ |
| Example 114 | 300 | 1250 | 0.1 | 0.05 | 48 | 99.64 | ○ |
| Example 115 | 300 | 1350 | 0.1 | 0.05 | 44.4 | 99.66 | ○ |
| Example 116 | 325 | 1150 | 0.1 | 0.05 | 56.5 | 99.63 | ○ |
| Example 117 | 325 | 1350 | 0.1 | 0.05 | 48.1 | 99.45 | ○ |
| Example 118 | 200 | 1050 | 0.1 | 0.05 | 38.1 | 99.32 | Δ |
| Example 119 | 200 | 1150 | 0.1 | 0.05 | 34.8 | 99.16 | Δ |
| Example 120 | 275 | 1350 | 0.1 | 0.05 | 40.7 | 99.18 | Δ |
| Example 121 | 325 | 1050 | 0.1 | 0.05 | 61.9 | 99.38 | Δ |
| Example 122 | 225 | 1350 | 0.1 | 0.05 | 33.3 | 98.94 | × |
| Example 123 | 200 | 1250 | 0.1 | 0.05 | 32 | 98.60 | × |
| Example 124 | 200 | 1350 | 0.1 | 0.05 | 29.6 | 97.22 | × |

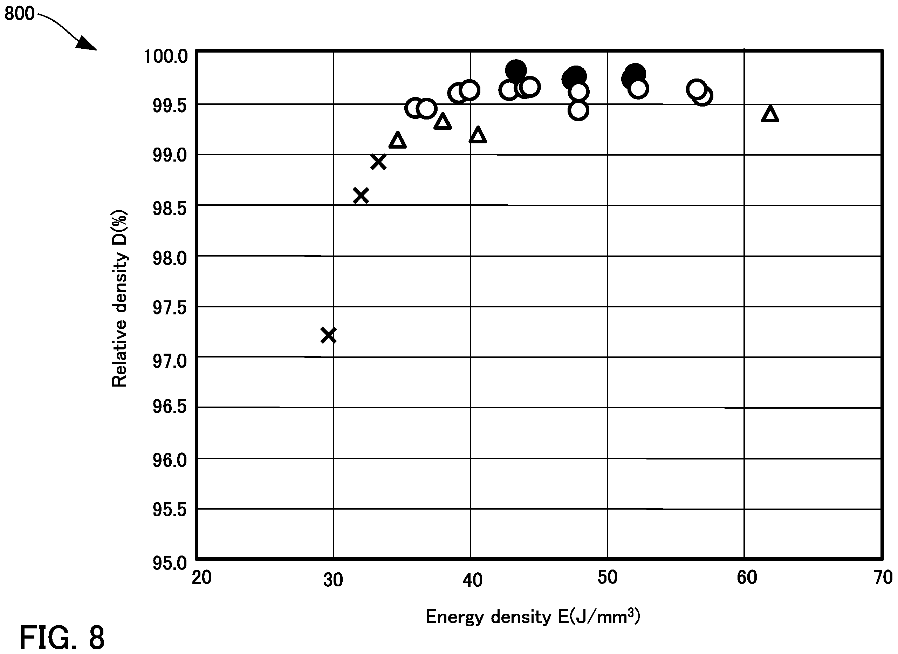

Fig. 8 is a graph 800 showing the relation between the relative density of the shaped object and the energy density of the shaping surface according to Example 1. The graph of Fig. 8 was generated based on Table 1. It is apparent from Fig. 8 that an appropriate energy density (for example, a range higher than 34.0 J/mm³, preferably, a range from 41.0 to 57.0 J/mm³, and more preferably, a range from 43.0 to 53.0 J/mm³) is required to obtain quality of a high relative density.

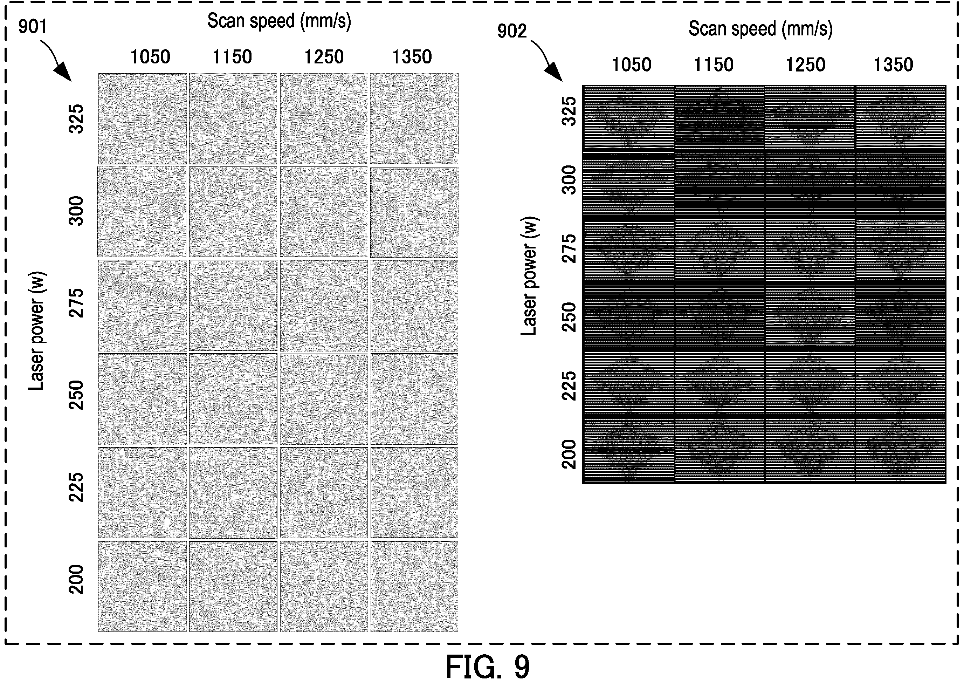

Fig. 9 is a view showing images 901 and 902 of surface texture by the three-dimensional optical profiler according to Example 1. Table 2 shows the three-dimensional surface texture parameters calculated from the surface texture. [Table 2]

**Table 2: Relation Between Relative Density and Three-Dimensional Surface Texture Parameter in Example 1**

| | Relative Density % | Determination | Sal | Sda | Sha | Sdv | Smr2 | Sdr | Str |
|---|---|---|---|---|---|---|---|---|---|
| | | | mm | mm² | mm² | mm³ | % | % | |
| | RD | | | | | | | | |
| Example 101 | 99.75 | ● | 0.231 | 0.0716 | 0.0423 | 6.87E-05 | 89.9 | 986 | 0.642 |
| Example 102 | 99.83 | ● | 0.198 | 0.0446 | 0.033 | 4.22E-05 | 89.8 | 17.9 | 0.593 |
| Example 103 | 99.77 | ● | 0.245 | 0.0648 | 0.0418 | 6.36E-05 | 89.9 | 11.8 | 0.499 |
| Example 104 | 99.78 | ● | 0.423 | 0.0679 | 0.0444 | 6.55E-05 | 90.3 | 5.53 | 0.701 |
| Example 105 | 99.73 | ● | 0.324 | 0.048 | 0.0408 | 4.31E-05 | 90.4 | 10.2 | 0.183 |
| Example 106 | 99.64 | ○ | 0.242 | 0.0487 | 0.0378 | 6.63E-05 | 89.5 | 18.7 | 0.701 |
| Example 107 | 99.61 | ○ | 0.213 | 0.0309 | 0.0263 | 3.27E-05 | 88.8 | 32.3 | 0.608 |
| Example 108 | 99.45 | ○ | 0.19 | 0.0267 | 0.0264 | 3.14E-05 | 89 | 48.7 | 0.673 |
| Example 109 | 99.63 | ○ | 0.187 | 0.0385 | 0.0299 | 4.58E-05 | 89 | 31.4 | 0.661 |
| Example 110 | 99.45 | ○ | 0.164 | 0.028 | 0.0246 | 3.49E-05 | 88.2 | 45.5 | 0.660 |
| Example 111 | 99.65 | ○ | 0.434 | 0.0417 | 0.0333 | 0.00003 | 89.5 | 11.0 | 0.138 |
| Example 112 | 99.65 | ○ | 0.213 | 0.0456 | 0.0345 | 4.64E-05 | 89.5 | 17.5 | 0.607 |
| Example 113 | 99.57 | ○ | 0.517 | 0.0578 | 0.0473 | 3.96E-05 | 91.2 | 3.73 | 0.366 |
| Example 114 | 99.64 | ○ | 0.283 | 0.0505 | 0.0395 | 0.00004 | 90.2 | 11.0 | 0.584 |
| Example 115 | 99.66 | ○ | 0.244 | 0.0357 | 0.0342 | 3.43E-05 | 89.9 | 23.3 | 0.702 |
| Example 116 | 99.63 | ○ | 0.445 | 0.0535 | 0.0435 | 3.36E-05 | 90.6 | 5.76 | 0.141 |
| Example 117 | 99.45 | ○ | 0.333 | 0.0336 | 0.0312 | 3.56E-05 | 90.1 | 25.8 | 0.729 |
| Example 118 | 99.32 | Δ | 0.257 | 0.0291 | 0.0214 | 3.25E-05 | 89.6 | 35.4 | 0.716 |
| Example 119 | 99.16 | Δ | 0.221 | 0.0232 | 0.0216 | 0.00003 | 88.9 | 52.9 | 0.746 |
| Example 120 | 99.18 | Δ | 0.199 | 0.0302 | 0.026 | 2.88E-05 | 90.1 | 28.5 | 0.608 |
| Example 121 | 99.38 | Δ | 0.522 | 0.0905 | 0.0635 | 4.51E-05 | 90.5 | 2.71 | 0.596 |
| Example 122 | 98.94 | × | 0.136 | 0.0232 | 0.0261 | 3.28E-05 | 88 | 59.0 | 0.616 |
| Example 123 | 98.60 | × | 0.149 | 0.0233 | 0.0263 | 3.57E-05 | 87.8 | 65.1 | 0.681 |
| Example 124 | 97.22 | × | 0.131 | 0.0215 | 0.0297 | 3.82E-05 | 87 | 75.2 | 0.590 |

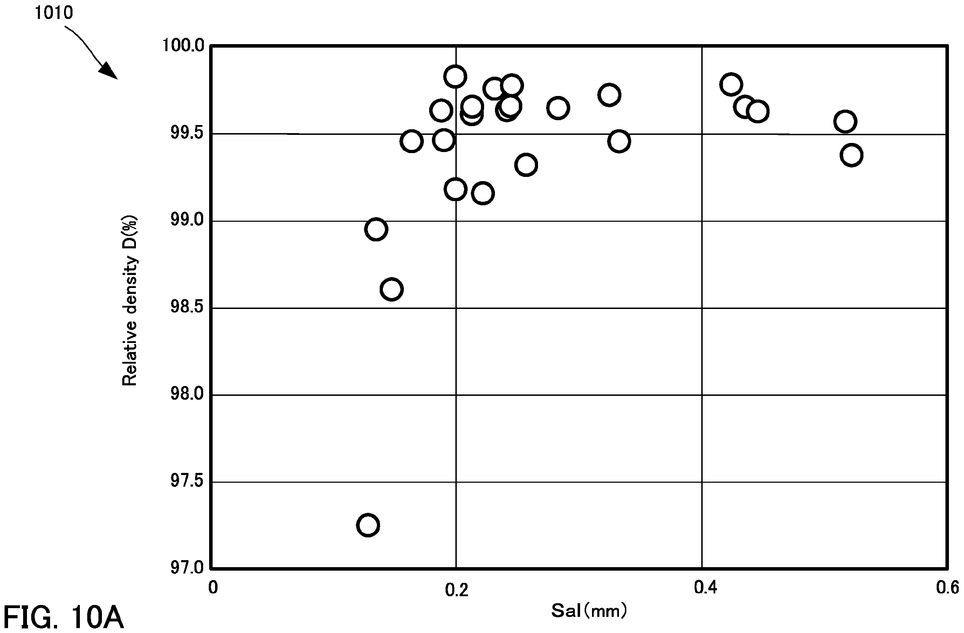

Figs. 10A to 10G are graphs each showing the relation between the relative density of the shaped object and each three-dimensional surface texture parameter based on Table 2.

Fig. 10A is a graph 1010 showing the relation between the relative density and Sal according to Example 1. It is apparent from Fig. 10A that the relative density and Sal have a positive correlation. It is also apparent from Fig. 10A that the relative density tends to be low if the value of Sal is smaller than a given value (for example, 0.15 mm). Therefore, it is possible to predict the relative density of the shaping object from the value of Sal of the surface of the shaping object.

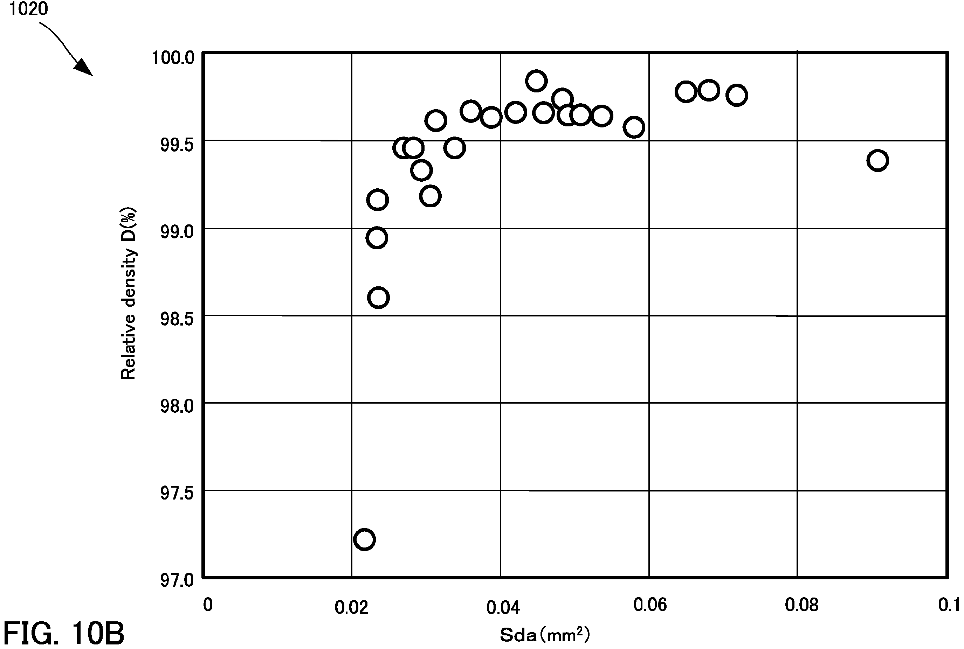

Fig. 10B is a graph 1020 showing the relation between the relative density and Sda according to Example 1. It is apparent from Fig. 10B that the relative density and Sda have a positive correlation. It is also apparent from Fig. 10B that the relative density tends to be low if the value of Sda is smaller than a given value (for example, 0.025 mm²). Therefore, it is possible to predict the relative density of the shaping object from the value of Sda of the surface of the shaping object.

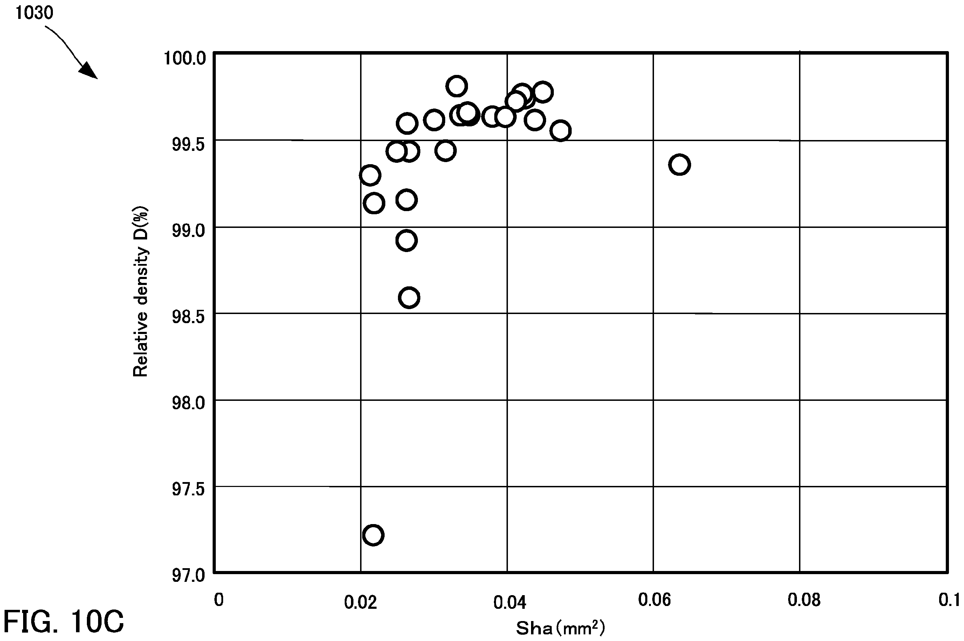

Fig. 10C is a graph 1030 showing the relation between the relative density and Sha according to Example 1. It is apparent from Fig. 10C that the relative density and Sda have a positive correlation. It is also apparent from Fig. 10C that the relative density tends to be low if the value of Sha is smaller than a given value (for example, 0.030 mm²). Therefore, it is possible to predict the relative density of the shaping object from the value of Sha of the surface of the shaping object.

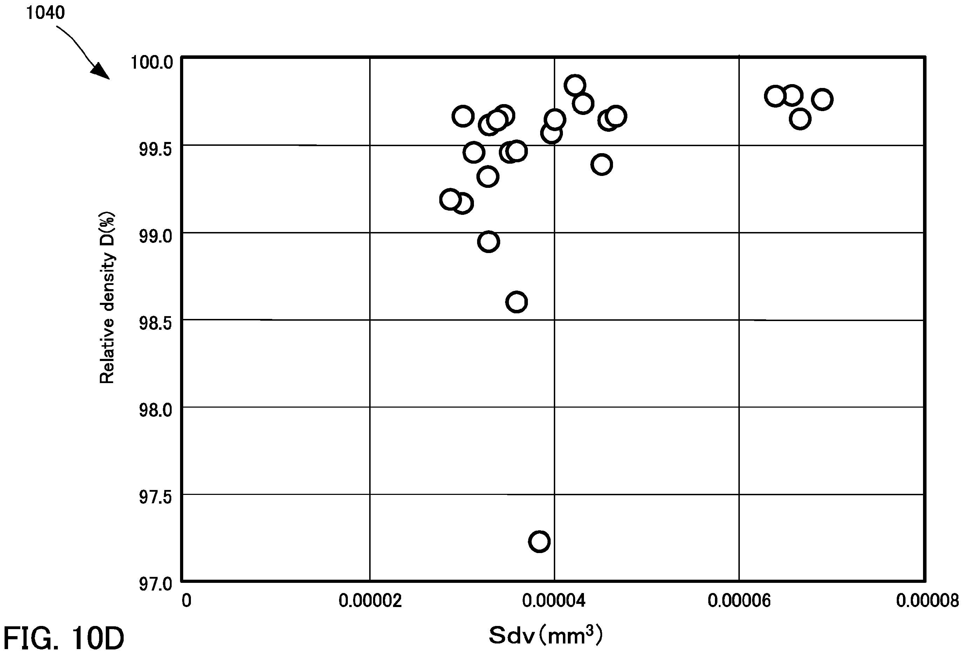

Fig. 10D is a graph 1040 showing the relation between the relative density and Sdv according to Example 1. It is apparent from Fig. 10D that the relative density and Sdv have a positive correlation. It is also apparent from Fig. 10D that the relative density tends to be low if the value of Sdv is smaller than a given value (for example, 0.000039 mm³). Therefore, it is possible to predict the relative density of the shaping object from the value of Sdv of the surface of the shaping object.

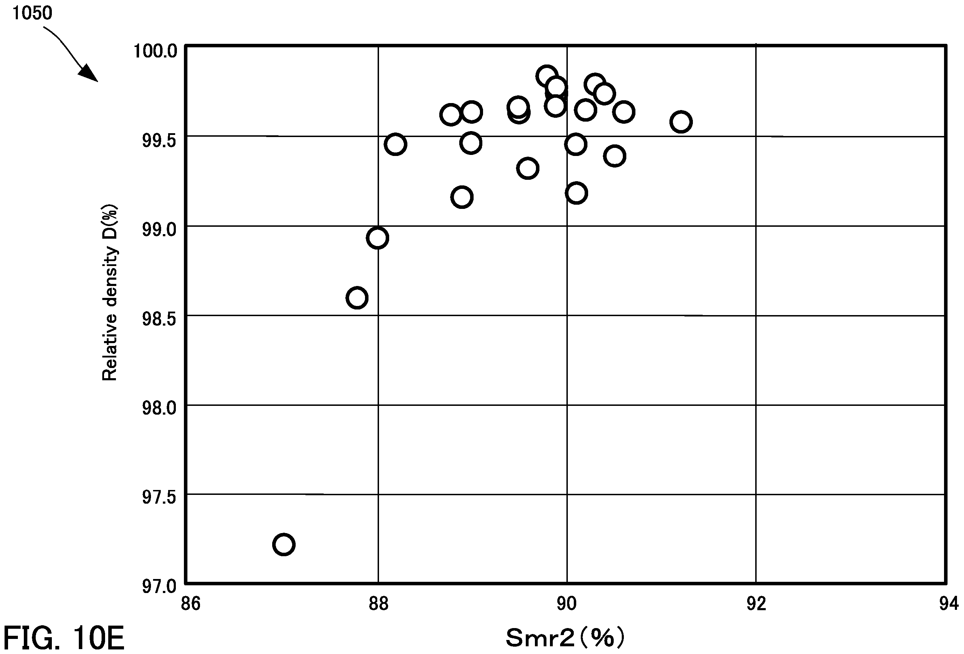

Fig. 10E is a graph 1050 showing the relation between the relative density and Smr2 according to Example 1. It is apparent from Fig. 10E that the relative density and Smr2 have a positive correlation. It is also apparent from Fig. 10E that the relative density tends to be low if the value of Smr2 is smaller than a given value (for example, 88.0%). Therefore, it is possible to predict the relative density of the shaping object from the value of Smr2 of the surface of the shaping object.

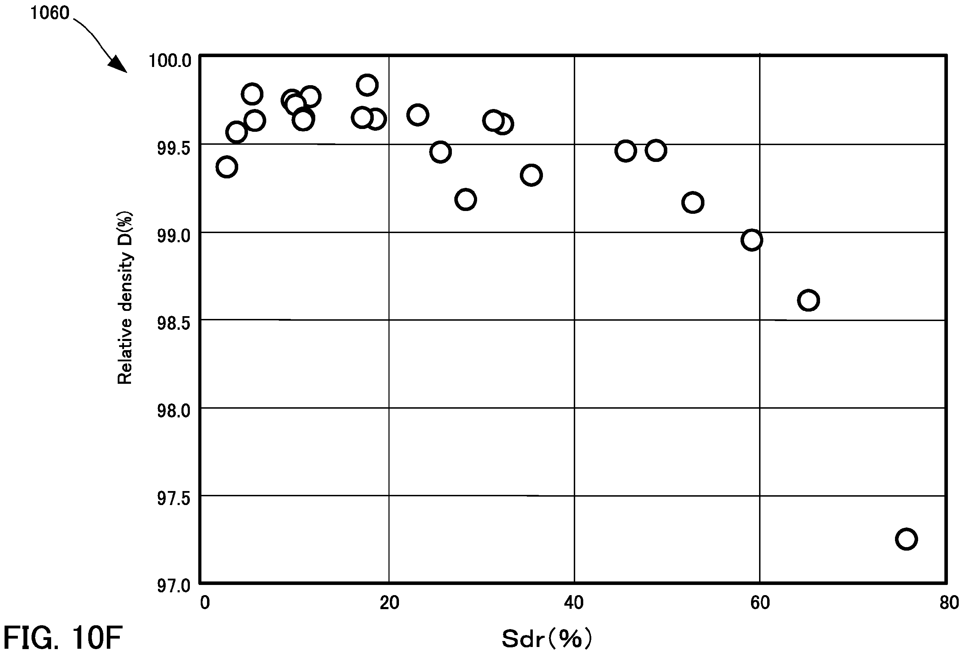

Fig. 10F is a graph 1060 showing the relation between the relative density and Sdr according to Example 1. It is apparent from Fig. 10F that the relative density and Sdr have a negative correlation. It is also apparent from Fig. 10F that the relative density tends to be low if the value of Sdr is larger than a given value (for example, 55.0%). Therefore, it is possible to predict the relative density of the shaping object from the value of Sdr of the surface of the shaping object.

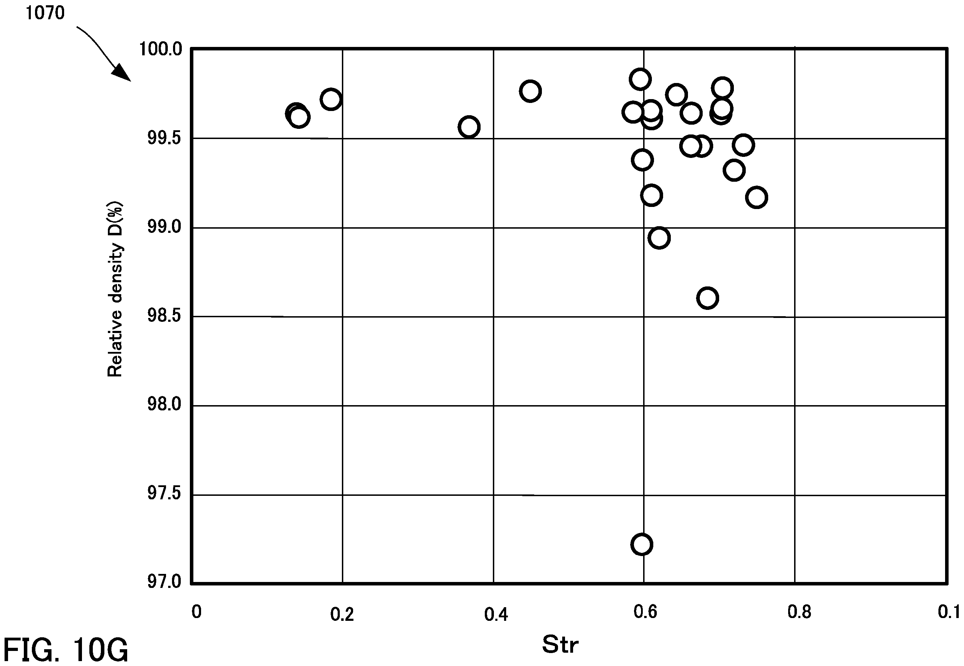

Fig. 10G is a graph 1070 showing the relation between the relative density and Str according to Example 1. It is apparent from Fig. 10G that the relative density and Str have a negative correlation. It is also apparent from Fig. 10G that the relative density tends to be low if the value of Str is larger than a given value (for example, 0.59). Therefore, it is possible to predict the relative density of the shaping object from the value of Str of the surface of the shaping object.

### <Example 2>

The relative density of each shaping test sample and the three-dimensional surface texture parameters according to this example embodiment when the energy density of a shaping surface was changed were calculated from an image of surface texture by layer monitoring. Note that the resolution of a surface image at the time of layer monitoring was given by x, y = 80 µm and z = 10 or 30 µm. Note that the relationship between the relative density and the energy density of the shaping surface was the same as in Example 1.

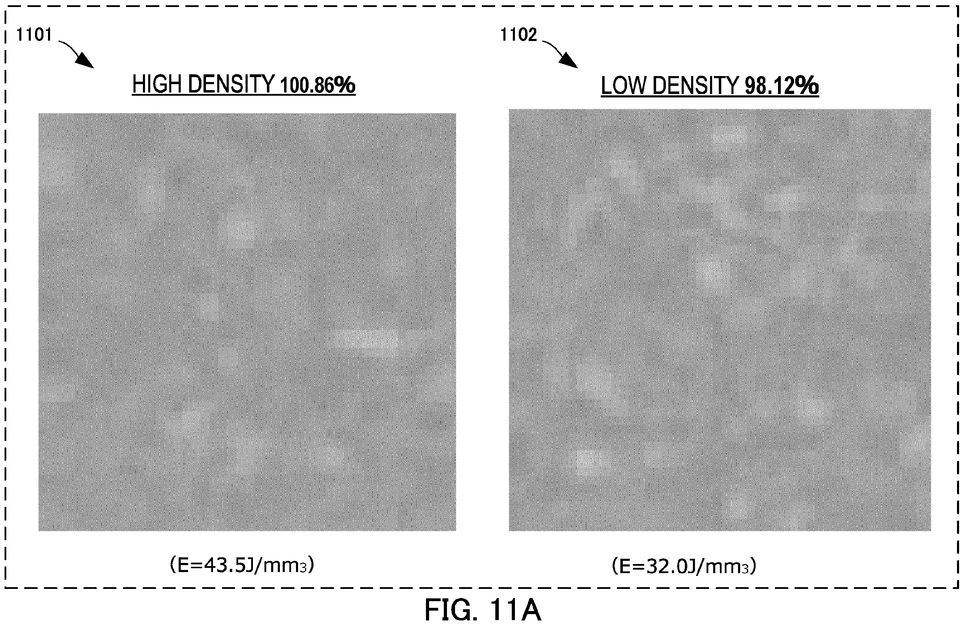

Fig. 11A is a view showing image examples 1101 and 1102 of surface texture of a shaping region by layer monitoring according to Example 2.

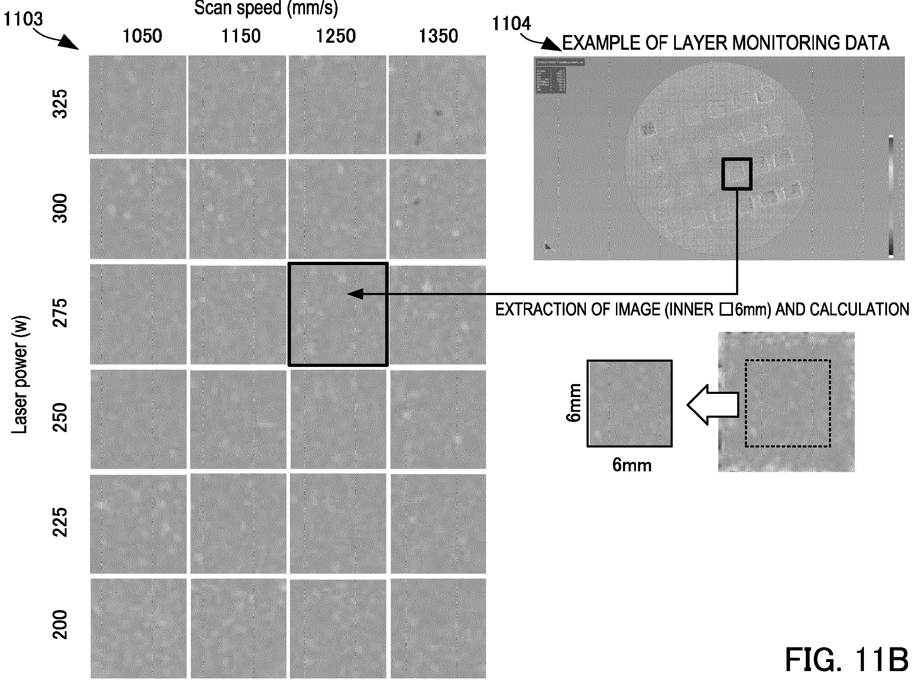

Fig. 11B is a view showing images 1103 of the surface texture by layer monitoring according to Example 2. As shown in Fig. 11B, the scan speed decreased on the periphery of a cube test piece, and the energy density increased, thereby generating a convex portion. Therefore, an image of a central portion (6 mm × 6 mm) was extracted from a surface image of the cube test piece of 10 mm × 10 mm, and the three-dimensional surface texture parameters were calculated based on point group data.

Table 3 shows the three-dimensional surface texture parameters calculated from the surface texture according to this example. [Table 3]

**Table 3: Relation Between Relative Density and Three-Dimensional Surface Texture Parameter in Example 2**

| | Relative Density % | Determination | Sal | Sda | Sha | Sdv | Smr2 |
|---|---|---|---|---|---|---|---|
| | | | mm | mm² | mm² | mm3 | % |
| | RD | | | | | | |
| Example 201 | 99.75 | ● | 0.26 | 0.514 | 0.49 | 0.001 | 89.4 |
| Example 202 | 99.83 | ● | 0.28 | 0.541 | 0.589 | 0.001 | 90.2 |
| Example 203 | 99.77 | ● | 0.3 | 0.549 | 0.607 | 0.001 | 91.2 |
| Example 204 | 99.78 | ● | 0.35 | 0.763 | 0.723 | 0.001 | 90.7 |
| Example 205 | 99.73 | ● | 0.33 | 0.631 | 0.629 | 9E-04 | 89.9 |
| Example 206 | 99.64 | ○ | 0.28 | 0.572 | 0.592 | 0.001 | 91.7 |
| Example 207 | 99.61 | ○ | 0.31 | 0.503 | 0.471 | 0.001 | 90.1 |
| Example 208 | 99.45 | ○ | 0.32 | 0.538 | 0.521 | 0.001 | 90.8 |
| Example 209 | 99.63 | ○ | 0.29 | 0.591 | 0.536 | 0.001 | 91.3 |
| Example 210 | 99.45 | ○ | 0.32 | 0.539 | 0.512 | 0.001 | 90.9 |
| Example 211 | 99.65 | ○ | 0.46 | 0.578 | 0.549 | 0.001 | 90.4 |
| Example 212 | 99.65 | ○ | 0.29 | 0.595 | 0.552 | 0.001 | 90.7 |
| Example 213 | 99.57 | ○ | 0.31 | 0.618 | 0.557 | 0.001 | 89.9 |
| Example 214 | 99.64 | ○ | 0.27 | 0.632 | 0.563 | 0.002 | 90.2 |
| Example 215 | 99.66 | ○ | 0.31 | 0.636 | 0.611 | 0.002 | 90.9 |
| Example 216 | 99.63 | ○ | 0.38 | 0.981 | 0.816 | 0.003 | 91.3 |
| Example 217 | 99.45 | ○ | 0.32 | 0.597 | 0.574 | 0.002 | 90.8 |
| Example 218 | 99.32 | Δ | 0.32 | 0.561 | 0.541 | 0.002 | 93 |
| Example 219 | 99.16 | Δ | 0.3 | 0.493 | 0.552 | 1E-03 | 91.6 |
| Example 220 | 99.18 | Δ | 0.27 | 0.559 | 0.625 | 0.001 | 91.4 |
| Example 221 | 99.38 | Δ | 0.36 | 0.611 | 0.545 | 8E-04 | 90.6 |
| Example 222 | 98.94 | × | 0.3 | 0.557 | 0.517 | 0.001 | 89.4 |
| Example 223 | 98.60 | × | 0.29 | 0.477 | 0.441 | 0.001 | 90.1 |
| Example 224 | 97.22 | × | 0.32 | 0.573 | 0.464 | 0.001 | 89.6 |

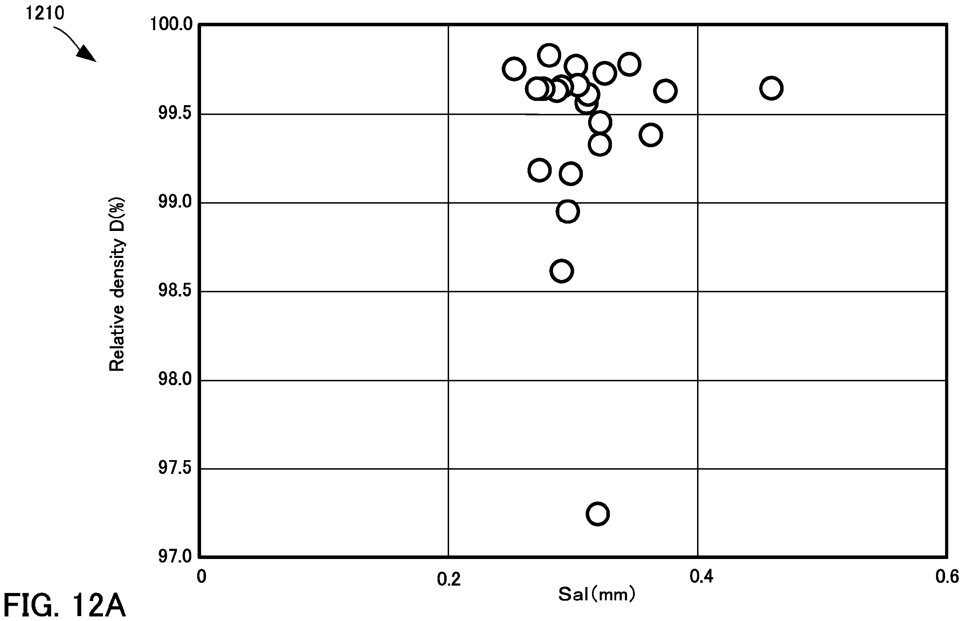

Figs. 12A to 12E are graphs each showing the relation between the relative density of the shaped object and each three-dimensional surface texture parameter based on Table 3.

Fig. 12A is a graph 1210 showing the relation between the relative density and Sal according to Example 2. It is apparent from Fig. 12A that the relative density and Sal have an almost positive correlation. It is also apparent from Fig. 12A that the relative density may become low if the value of Sal is smaller than a given value (for example, 0.30 mm). Therefore, it is possible to predict a decrease in the relative density of a shaping object from the value of Sal of the layer surface.

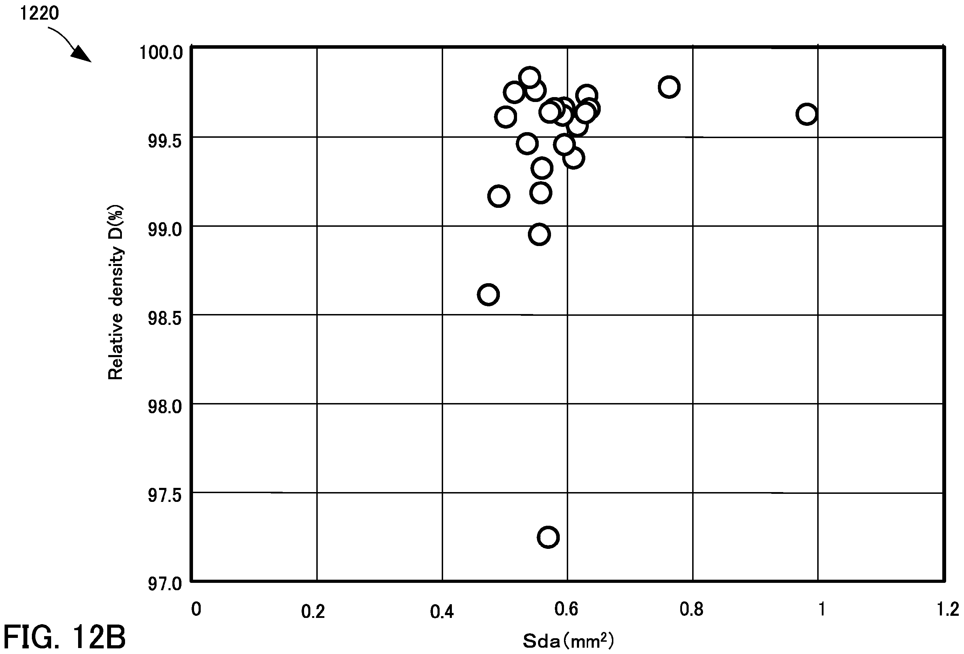

Fig. 12B is a graph 1220 showing the relation between the relative density and Sda according to Example 2. It is apparent from Fig. 12B that the relative density and Sda have an almost positive correlation. It is also apparent from Fig. 12B that the relative density may become low if the value of Sda is smaller than a given value (for example, 0.580 mm²). Therefore, it is possible to predict a decrease in the relative density of the shaping object from the value of Sda of the layer surface.

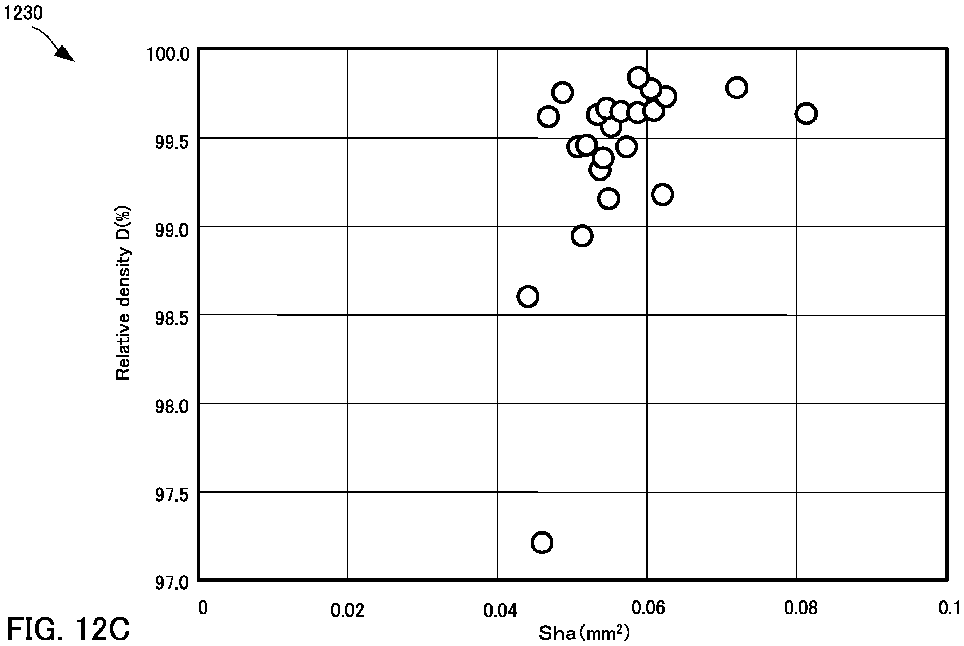

Fig. 12C is a graph 1230 showing the relation between the relative density and Sha according to Example 2. It is apparent from Fig. 12C that the relative density and Sha have an almost positive correlation. It is also apparent from Fig. 12C that the relative density may become low if the value of Sha is smaller than a given value (for example, 0.520 mm²). Therefore, it is possible to predict a decrease in the relative density of the shaping object from the value of Sha of the layer surface.

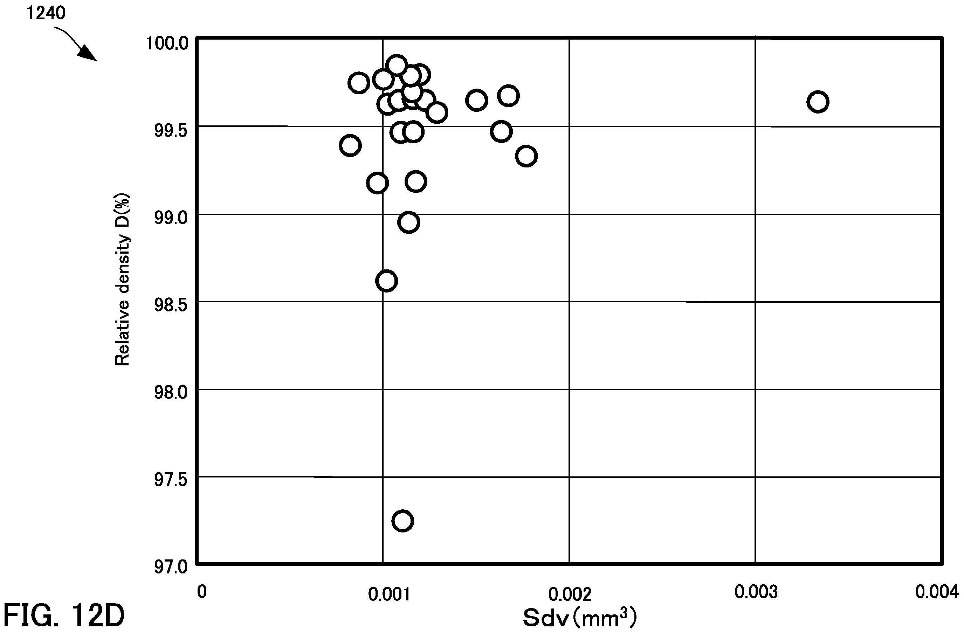

Fig. 12D is a graph 1240 showing the relation between the relative density and Sdv according to Example 2. It is apparent from Fig. 12D that the relative density and Sdv have an almost positive correlation. It is also apparent from Fig. 12D that the relative density may become low if the value of Sdv is smaller than a given value (for example, 0.001 mm³). Therefore, it is possible to predict a decrease in the relative density of the shaping object from the value of Sdv of the layer surface.

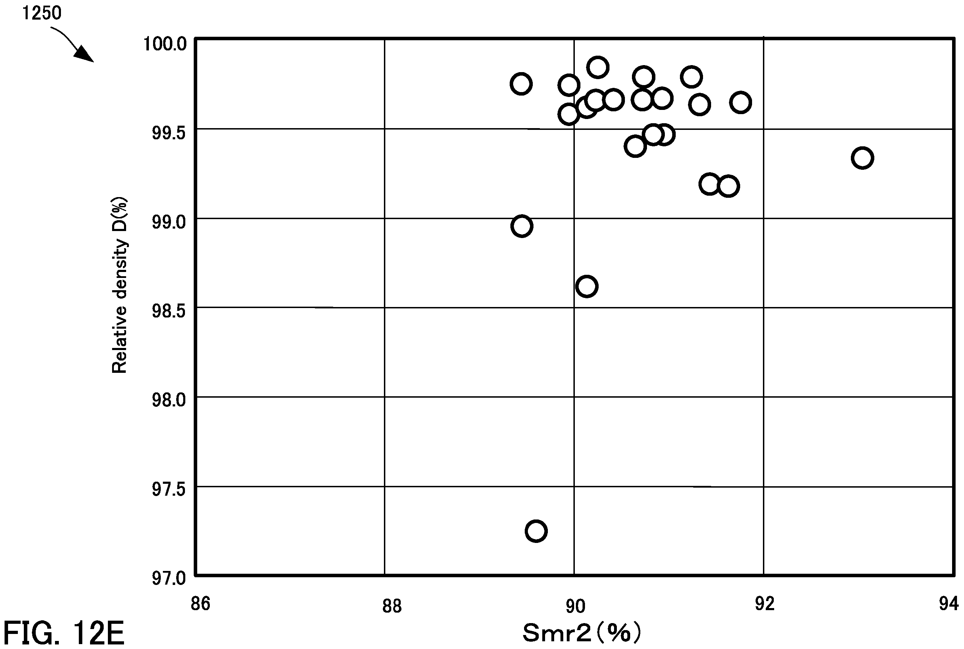

Fig. 12E is a graph 1250 showing the relation between the relative density and Smr2 according to Example 2. It is apparent from Fig. 12E that the relative density and Smr2 have an almost positive correlation. It is also apparent from Fig. 12E that the relative density may become low if the value of Smr2 is smaller than a given value (for example, 90.1%). Therefore, it is possible to predict a decrease in the relative density of the shaping object from the value of Smr2 of the layer surface.

As described above, it is understood that Sal, Sda, Sha, Sdv, and Smr2 can be used as indices for evaluating a decrease in the relative density of the shaping object.

### <Example 3>

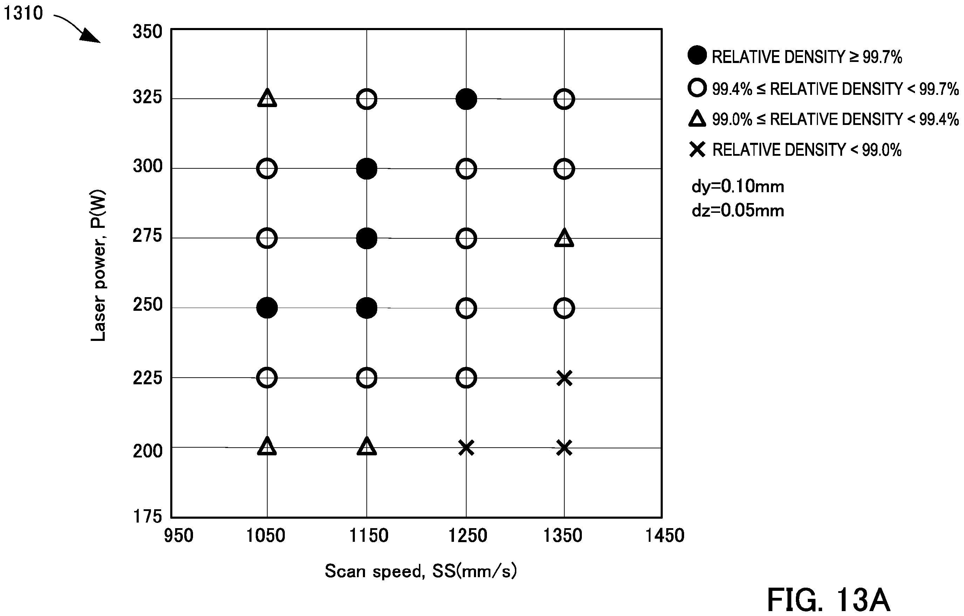

Fig. 13A shows a practical process map 1310 to be used for the process map 571 shown in Fig. 5, which was generated from the results of Examples 1 and 2 described above.

By preparing, in an information processing apparatus of a laminating and shaping apparatus, the process map 1310 generated based on the result of Example 2, point group data is generated from a surface image captured after at least one layer is shaped. Then, an appropriate three-dimensional surface texture parameter is calculated from the generated point group data. Based on the three-dimensional surface texture parameter, it is possible to predict a shaping density and control the shaping density to be that required for a shaping object. For example, if the shaping density is stable as high as the required one, shaping is continued, and if a decrease in shaping density is predicted, remelting is performed under the same condition or the laser power or the scan speed is adjusted to increase the shaping density. Even if the shaping density is equal to or higher than the required one, if the shaping density is predicted to be unstable, transition is performed to a level at which the shaping density is stable.

### (Example of Measurement of Detailed Energy Density and Relative Density of Shaping Object)

Table 4 shows the detailed energy density, the relative density of the object to be shaped as the shaping density, and the evaluation result.

**[Table 4]**

| | Laser Power W | Scan Speed mm/s | Hatch Distance mm | Lamination Thickness mm | Energy Density J/mm³ | Relative Density % | Determination |
|---|---|---|---|---|---|---|---|
| | P(W) | SS | dy | dz | E | RD | |
| Example 301 | 200 | 750 | 0.1 | 0.05 | 53.3 | 100.02 | ● |
| Example 302 | 200 | 750 | 0.1 | 0.05 | 43.5 | 99.96 | ● |
| Example 303 | 300 | 1350 | 0.1 | 0.05 | 44.4 | 99.88 | ● |
| Example 304 | 350 | 1150 | 0.1 | 0.05 | 60.9 | 99.87 | ● |
| Example 305 | 225 | 750 | 0.1 | 0.05 | 60 | 99.84 | ● |
| Example 306 | 325 | 850 | 0.1 | 0.05 | 76.5 | 99.82 | ● |
| Example 307 | 250 | 1150 | 0.1 | 0.05 | 43.5 | 99.80 | ● |
| Example 308 | 275 | 750 | 0.1 | 0.05 | 73.3 | 99.78 | ● |
| Example 309 | 200 | 850 | 0.1 | 0.05 | 47.1 | 99.76 | ● |
| Example 310 | 250 | 750 | 0.1 | 0.05 | 66.7 | 99.76 | ● |
| Example 311 | 300 | 750 | 0.1 | 0.05 | 80 | 99.76 | ● |
| Example 312 | 225 | 650 | 0.1 | 0.05 | 69.2 | 99.75 | ● |
| Example 313 | 225 | 590 | 0.1 | 0.05 | 76.3 | 99.75 | ● |
| Example 314 | 250 | 650 | 0.1 | 0.05 | 76.9 | 99.75 | ● |
| Example 315 | 325 | 1450 | 0.1 | 0.05 | 44.8 | 99.75 | ● |
| Example 316 | 350 | 850 | 0.1 | 0.05 | 82.4 | 99.75 | ● |
| Example 317 | 300 | 850 | 0.1 | 0.05 | 70.6 | 99.74 | ● |
| Example 318 | 350 | 1050 | 0.1 | 0.05 | 66.7 | 99.74 | ● |
| Example 319 | 225 | 570 | 0.1 | 0.05 | 78.9 | 99.73 | ● |
| Example 320 | 350 | 1250 | 0.1 | 0.05 | 56 | 99.73 | ● |
| Example 321 | 225 | 615 | 0.1 | 0.05 | 73.2 | 99.72 | ● |
| Example 322 | 175 | 850 | 0.1 | 0.05 | 41.2 | 99.70 | ○ |
| Example 323 | 200 | 950 | 0.1 | 0.05 | 42.1 | 99.69 | ○ |
| Example 324 | 325 | 950 | 0.1 | 0.05 | 68.4 | 99.69 | ○ |
| Example 325 | 175 | 750 | 0.1 | 0.05 | 46.7 | 99.66 | ○ |
| Example 326 | 225 | 950 | 0.1 | 0.05 | 47.4 | 99.65 | ○ |
| Example 327 | 200 | 1180 | 0.1 | 0.05 | 33.9 | 99.63 | ○ |
| Example 328 | 275 | 950 | 0.1 | 0.05 | 57.9 | 99.63 | ○ |
| Example 329 | 200 | 1150 | 0.1 | 0.05 | 34.8 | 99.62 | ○ |
| Example 330 | 200 | 1180 | 0.1 | 0.05 | 33.9 | 99.59 | ○ |
| Example 331 | 200 | 1130 | 0.1 | 0.05 | 35.4 | 99.59 | ○ |
| Example 332 | 225 | 550 | 0.1 | 0.05 | 81.8 | 99.59 | ○ |
| Example 333 | 350 | 1150 | 0.1 | 0.05 | 60.9 | 99.59 | ○ |
| Example 334 | 350 | 1550 | 0.1 | 0.05 | 45.2 | 99.59 | ○ |
| Example 335 | 200 | 1180 | 0.1 | 0.05 | 33.9 | 99.58 | ○ |
| Example 336 | 250 | 950 | 0.1 | 0.05 | 52.6 | 99.57 | ○ |
| Example 337 | 300 | 950 | 0.1 | 0.05 | 63.2 | 99.57 | ○ |
| Example 338 | 275 | 850 | 0.1 | 0.05 | 64.7 | 99.56 | ○ |
| Example 339 | 200 | 1130 | 0.1 | 0.05 | 35.4 | 99.55 | ○ |
| Example 340 | 225 | 850 | 0.1 | 0.05 | 52.9 | 99.54 | ○ |
| Example 341 | 175 | 650 | 0.1 | 0.05 | 53.8 | 99.50 | ○ |
| Example 342 | 250 | 850 | 0.1 | 0.05 | 58.8 | 99.47 | ○ |
| Example 343 | 200 | 1160 | 0.1 | 0.05 | 34.5 | 99.45 | ○ |
| Example 344 | 200 | 1180 | 0.1 | 0.05 | 33.9 | 99.45 | ○ |
| Example 345 | 200 | 650 | 0.1 | 0.05 | 61.5 | 99.43 | ○ |
| Example 346 | 225 | 1350 | 0.1 | 0.05 | 33.3 | 99.37 | Δ |
| Example 347 | 325 | 1850 | 0.1 | 0.05 | 35.1 | 99.36 | Δ |
| Example 348 | 200 | 1160 | 0.1 | 0.05 | 34.5 | 99.33 | Δ |
| Example 349 | 175 | 950 | 0.1 | 0.05 | 36.8 | 99.29 | Δ |
| Example 350 | 350 | 1350 | 0.1 | 0.05 | 51.9 | 99.28 | Δ |
| Example 351 | 175 | 1050 | 0.1 | 0.05 | 33.3 | 99.21 | Δ |
| Example 352 | 200 | 1270 | 0.1 | 0.05 | 31.5 | 99.17 | Δ |
| Example 353 | 200 | 1290 | 0.1 | 0.05 | 31 | 99.13 | Δ |
| Example 354 | 200 | 1270 | 0.1 | 0.05 | 31.5 | 98.92 | × |
| Example 355 | 350 | 2050 | 0.1 | 0.05 | 34.1 | 98.89 | × |
| Example 356 | 200 | 1300 | 0.1 | 0.05 | 30.8 | 98.82 | × |
| Example 357 | 200 | 1350 | 0.1 | 0.05 | 29.6 | 98.78 | × |
| Example 358 | 200 | 1290 | 0.1 | 0.05 | 31 | 98.60 | × |
| Example 359 | 200 | 1380 | 0.1 | 0.05 | 29 | 98.48 | × |
| Example 360 | 200 | 1250 | 0.1 | 0.05 | 32 | 98.47 | × |
| Example 361 | 175 | 1230 | 0.1 | 0.05 | 28.5 | 98.29 | × |
| Example 362 | 175 | 1150 | 0.1 | 0.05 | 30.4 | 98.14 | × |
| Example 363 | 200 | 1380 | 0.1 | 0.05 | 29 | 98.04 | × |
| Example 364 | 175 | 1230 | 0.1 | 0.05 | 28.5 | 97.98 | × |
| Example 365 | 175 | 1270 | 0.1 | 0.05 | 27.6 | 97.79 | × |
| Example 366 | 175 | 1200 | 0.1 | 0.05 | 29.2 | 97.75 | × |
| Example 367 | 175 | 1250 | 0.1 | 0.05 | 28 | 97.47 | × |
| Example 368 | 175 | 1320 | 0.1 | 0.05 | 26.5 | 97.11 | × |
| Example 369 | 175 | 1300 | 0.1 | 0.05 | 26.9 | 97.07 | × |
| Example 370 | 175 | 1300 | 0.1 | 0.05 | 26.9 | 97.01 | × |
| Example 371 | 175 | 1270 | 0.1 | 0.05 | 27.6 | 96.88 | × |
| Example 372 | 175 | 1320 | 0.1 | 0.05 | 26.5 | 96.83 | × |
| Example 373 | 175 | 1300 | 0.1 | 0.05 | 26.9 | 96.81 | × |
| Example 374 | 175 | 1350 | 0.1 | 0.05 | 25.9 | 96.15 | × |
| Example 375 | 175 | 1400 | 0.1 | 0.05 | 25 | 95.87 | × |
| Example 376 | 175 | 1450 | 0.1 | 0.05 | 24.1 | 95.64 | × |
| Example 377 | 175 | 1400 | 0.1 | 0.05 | 25 | 95.52 | × |
| Example 378 | 175 | 1450 | 0.1 | 0.05 | 24.1 | 95.35 | × |

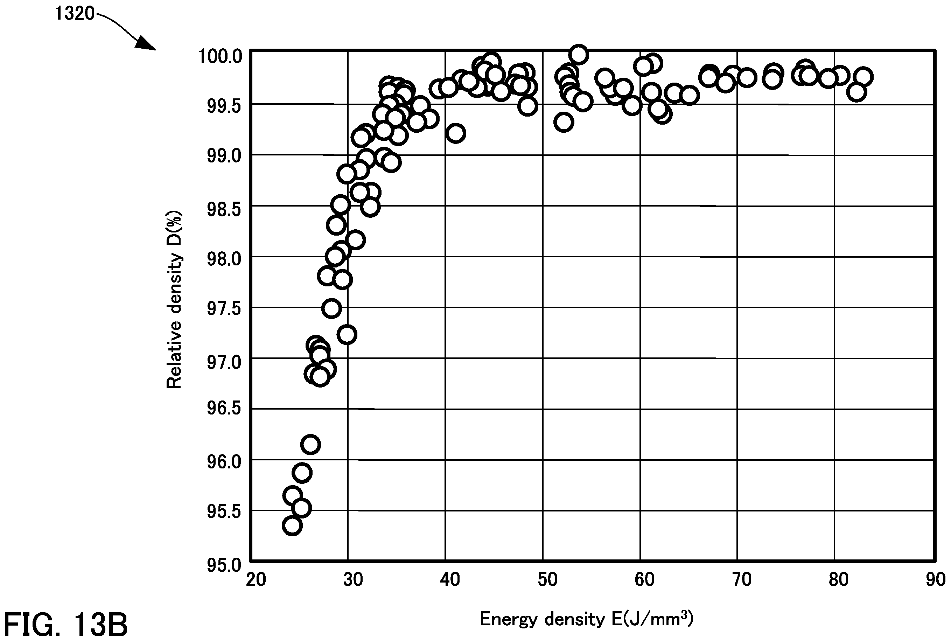

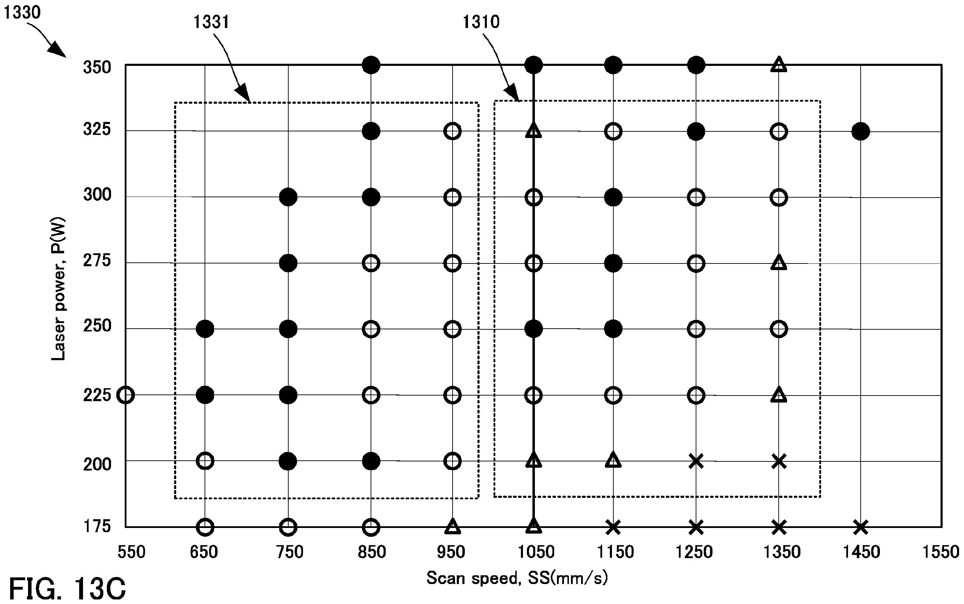

Fig. 13B is a graph 1320 showing the relation between the energy density and the relative density of the shaped object shown in Table 4. Fig. 13C is a graph showing the arrangement of another process map 1330 generated from Tables 1 and 4.

The process map 1330 includes the process map 1310. For example, in the process map 1330, within the range of the process map 1310, the laser power and the scan speed are controlled, as explained with reference to Fig. 13A. However, for example, within a partial map 1331 of the process map 1330, the laser power and the scan speed are controlled to be stable at ● within the range. If the shaping speed is required, control may be executed within the range of the process map 1310, and if the quality stability is required, control may be executed within the range of the partial map 1331 in which the range of ● is wide.

The present invention is not limited to the examples of the process map shown in Figs. 13A to 13C. By repeating the laminating and shaping test described in Example 1 or 2 and collecting data, it is possible to more preferably estimate a relative density and control the energy density based on the estimation of the relative density.

### <Example 4>

In Example 4, the fact that an amount of subduction at the surface and a shaping density have a correlation and the shaping density can be predicted from the amount of subduction at the surface will be described below.

### (Measurement of Amount of Subduction at Surface)

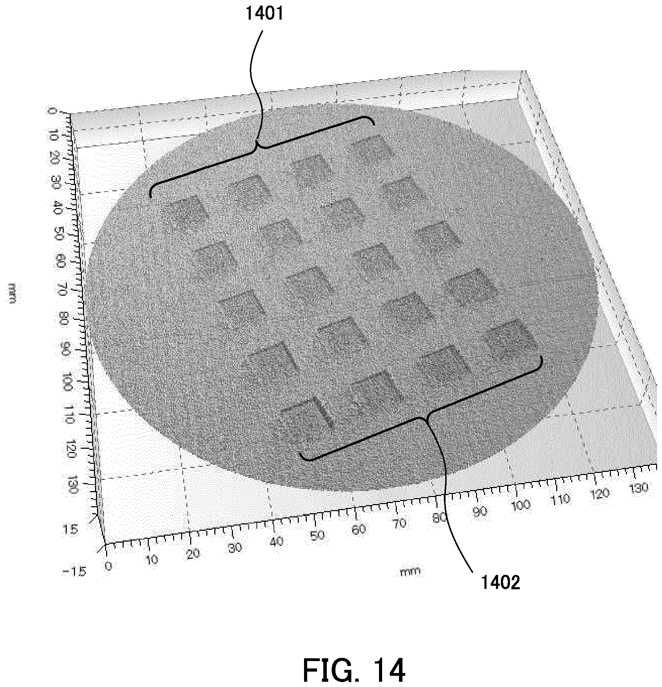

Fig. 14 is a view for explaining measurement of the amount of subduction at the surface according to Example 4. In shaping of one layer shown in Fig. 14, among 20 shaping test pieces, test pieces 1401 each had a small amount of subduction at the surface and test pieces 1402 each had a large amount of subduction at the surface. Note that with respect to the shaping condition of the shaping test piece, only the energy density was changed by changing a laser power and a scan speed, similar to Examples 1 and 2.

### (Correlation Between Amount of Subduction at Surface and Relative density)

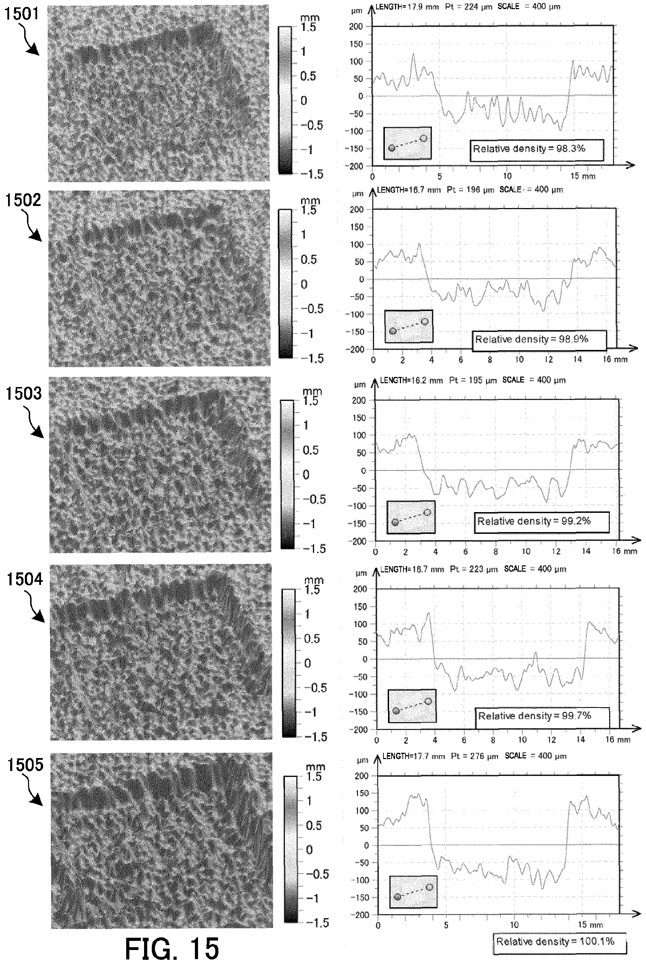

Fig. 15 is a view showing the result of measurement of the amount of subduction at the surface according to Example 4.

With respect to each cube test piece surface in Fig. 15, a graph on the right side shows a contour curve of one section of the cube test piece surface, which is one section crossing the cube test piece from a power bed surface. From a cube test piece B 1 (1501) to a cube test piece B5 (1505), the relative density as the shaping density becomes high, and the amount of subduction at the surface also becomes large, as compared with the powder bed surface. Note that the reason why the amount of subduction at the surface and the relative density has a correlation is estimated that if a test piece is formed with a high relative density, the surface subductions since no voids remain inside.

Table 5 shows the energy density, the relative density of the shaping object, and the evaluation result according to this example.

**Table 5**

| | Laser Power W | Scan Speed mm/s | Hatch Distance mm | Lamination Thickness mm | Energy Density J/mm | Relative Density % | Determination |
|---|---|---|---|---|---|---|---|
| | P(W) | SS | dy | dz | E | RD | |
| Example 401 | 250 | 1150 | 0.1 | 0.05 | 43.5 | 99.80 | ● |
| Example 402 | 225 | 1350 | 0.1 | 0.05 | 33.3 | 99.37 | Δ |
| Example 403 | 200 | 1270 | 0.1 | 0.05 | 31.5 | 98.92 | × |
| Example 404 | 200 | 1290 | 0.1 | 0.05 | 31 | 98.60 | × |
| Example 405 | 200 | 1380 | 0.1 | 0.05 | 29 | 98.04 | × |

Table 6 shows the values of the three-dimensional surface texture parameters based on the three-dimensional point group data of the laminating surface associated with the amount of subduction at the surface under the conditions of Table 5.

**[Table 6]**

| | Relative Density % | Determination | Sp | Sv | Sz | Sdv | Svk |
|---|---|---|---|---|---|---|---|
| | RD | | (µm) | (µm) | (µm) | (µm) | (µm) |
| Example 401 | 99.80 | ● | 313 | 142 | 455 | 0.007 | 9.93 |
| Example 402 | 99.37 | Δ | 196 | 116 | 311 | 0.003 | 8.15 |
| Example 403 | 98.92 | × | 162 | 118 | 280 | 0.003 | 8.08 |
| Example 404 | 98.60 | × | 152 | 110 | 262 | 0.003 | 7.42 |
| Example 405 | 98.04 | × | 179 | 132 | 311 | 0.002 | 8.31 |

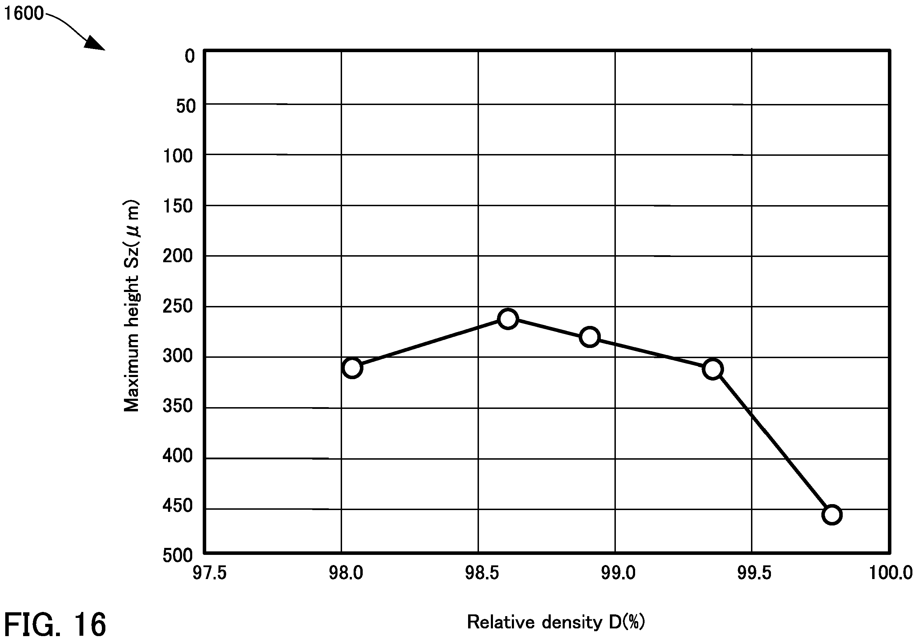

Fig. 16 is a graph showing the correlation result between the relative density and Sz according to this example. It is apparent from Fig. 16 that the relative density tends to be higher as Sz increases. For example, the amount of subduction at the surface for a relative density lower than 99.5% is smaller than that for a relative density of 99.5% or higher. Therefore, as the amount of subduction at the surface corresponding to Sz increases, the relative density of the shaping object becomes higher.

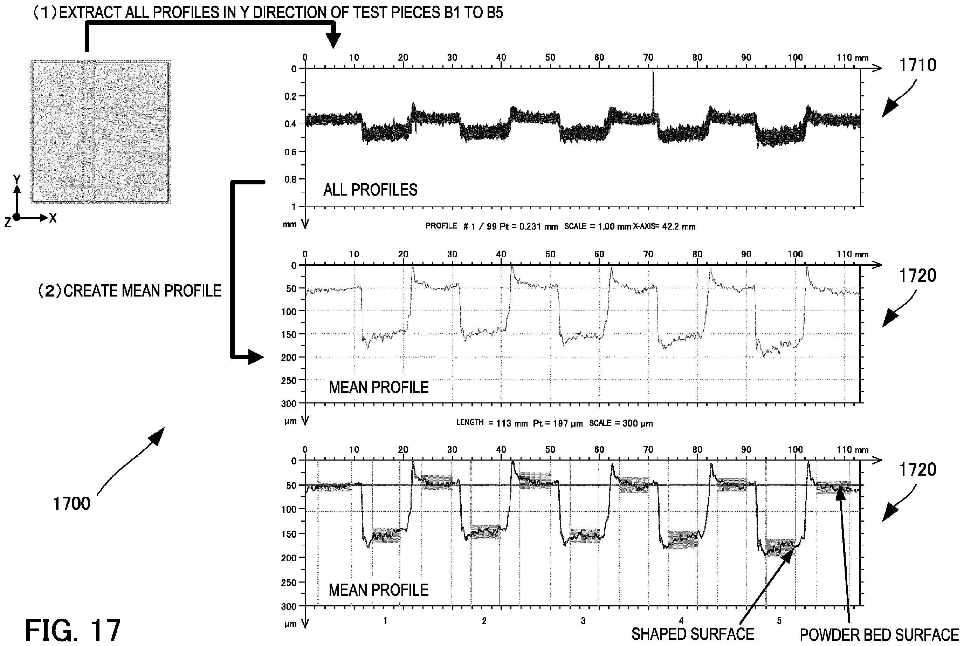

Fig. 17 is a view for explaining a method of calculating the amount of subduction at the surface according to this example. (1) All profiles 1710 in the Y direction of the test pieces B1 to B5 are extracted. (2) A mean profile 1720 is created based on all the profiles. (3) The difference between the height of the powder bed surface and the height of the shaping surface is calculated as an amount of subduction at the surface from the mean profile 1720.

Table 7 shows numerical values obtained in accordance with Fig. 17 for each of the test pieces B1 to B5.

**[Table 7]**

| | B1 | B2 | B3 | B4 | B5 |
|---|---|---|---|---|---|
| Relative Density % | 98.04 | 98.6 | 98.92 | 99.37 | 99.8 |
| Maximum Depth µm | 116.4 | 107.664 | 113.734 | 127.043 | 144.22 |
| Mean Depth µm | 103.8 | 96.7405 | 106.162 | 111.553 | 129.33 |
| Width mm | 5.683 | 5.7728 | 5.863 | 5.9532 | 5.9532 |

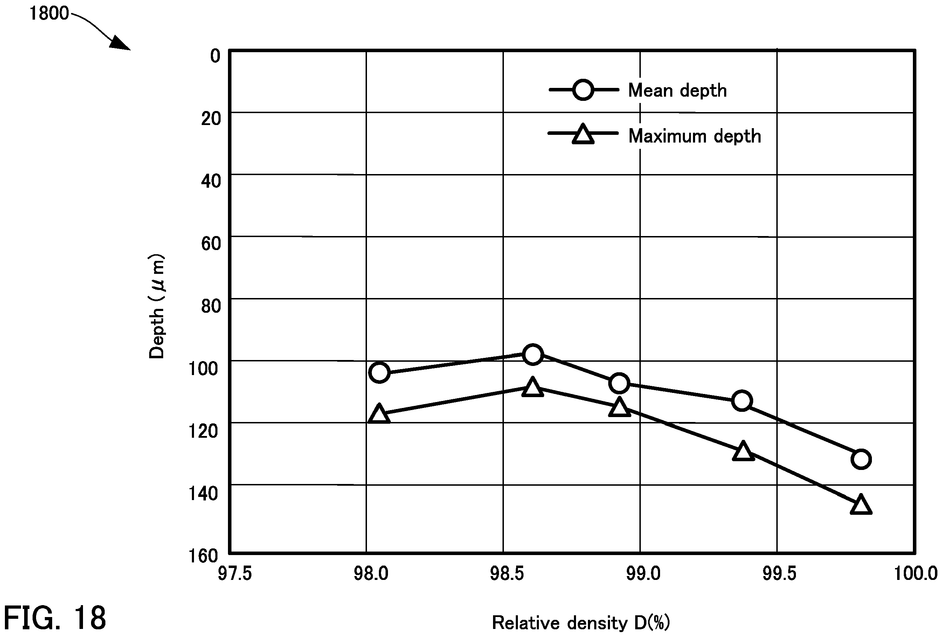

Fig. 18 is a graph showing the correlation result between the relative density and the amount of subduction at the surface based on Table 7 according to this example. Fig. 18 shows that as the calculated amount of subduction at the surface increases, the relative density of the shaping object becomes higher. Therefore, the relative density of the shaping object is predicted by observing the amount of subduction at the surface, and the energy density is changed by controlling the laser power and the scan speed, thereby making it possible to efficiently improve the shaping quality.

### <Example 5>

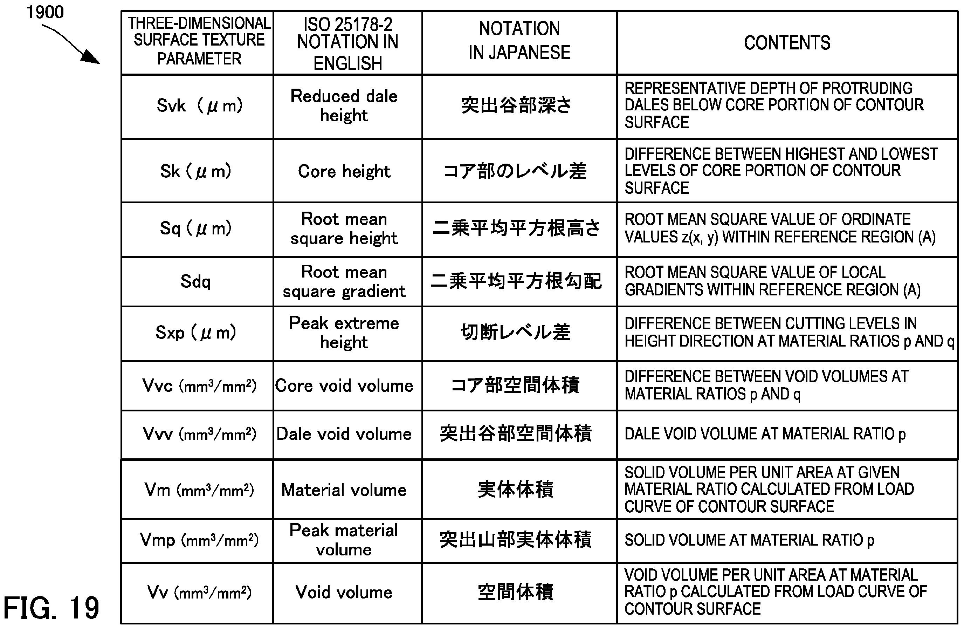

Fig. 19 is a table showing newly found three-dimensional surface texture parameters usable to predict the relative density of an object to be shaped according to Example 5. Note that the notation in Fig. 19 complies with ISO 25178-2 of non-patent literature 2 and JIS B 0681-2 of non-patent literature 3. In this example, the correlation between two variables having a nonlinear relationship was verified using a MIC (Maximal Information Coefficient) as a correlation coefficient for evaluating the correlation between each three-dimensional surface texture parameter and the relative density (see non-patent literature 4). Then, three-dimensional surface texture parameters each having a relatively high MIC value, for example, a MIC value of 0.65 or more were extracted as the three-dimensional surface texture parameters, shown in Fig. 19, usable to predict the relative density of the object to be shaped.

The extracted three-dimensional surface texture parameters usable to predict the relative density of the shaping object were a produced dale height (Svk (µm)), a core height (Sk (µm)), a root mean square height (Sq (µm)), a root mean square gradient (Sdq), a peak extreme height (Sxp (µm)), a core void volume (Vvc (mm³/mm²)), a dale void volume (Vvv (mm³/mm²)), a material volume (Vm (mm³/mm²)), a peak material volume (Vmp (mm³/mm²)), and a void volume (Vv (mm³/mm²)).

### (Experiment Condition of Example 5)

A material powder used for laminating and shaping in Example 5 was the same as in each of Examples 1 to 4. Furthermore, a laminating and shaping apparatus and a laminating and shaping condition according to Example 5 were the same as in each of Examples 1 to 4 and a repetitive description will be omitted.

### (Experiment Result Value of Example 5)

Tables 8 to 13 below show the numerical values of the experiment results of Examples 501 to 588. Tables 8, 10, and 12 show the relative density when the laminating and shaping condition was changed, and the determination result. Tables 9, 11, and 13 show the values of the three-dimensional surface texture parameters usable in the same examples.

Tables 8, 10, and 12 show laminating shaping condition parameters of a laser power, a laser scan speed, a hatch distance, a lamination thickness, and an energy density in each example. Then, the relative density of the laminating and shaping object with these laminating shaping condition parameters and a quality determination result are shown. Note that symbols each representing the quality determination result are the same as in each of Examples 1 to 4.

Tables 9, 11, and 13 show the values of the three-dimensional surface texture parameters in each example of Tables 8, 10, and 12. The three-dimensional surface texture parameters calculated in this example were 10 kinds of parameters shown in Fig. 19.

**[Table 8]**

| | Laser Power W | Scan Speed mm/s | Hatch Distance mm | Lamination Thickness mm | Energy Density J/mm³ | Relative Density % | Determination |
|---|---|---|---|---|---|---|---|
| | P(W) | SS | dy | dz | E | RD | |
| Example 501 | 175 | 1300 | 0.1 | 0.05 | 26.9 | 97.31 | × |
| Example 502 | 175 | 1270 | 0.1 | 0.05 | 27.6 | 98.09 | × |
| Example 503 | 175 | 1350 | 0.1 | 0.05 | 25.9 | 96.46 | × |
| Example 504 | 175 | 1230 | 0.1 | 0.05 | 28.5 | 98.59 | × |
| Example 505 | 175 | 850 | 0.1 | 0.05 | 41.2 | 99.99 | ● |
| Example 506 | 175 | 650 | 0.1 | 0.05 | 53.8 | 99.79 | ● |
| Example 507 | 175 | 750 | 0.1 | 0.05 | 46.7 | 99.95 | ● |
| Example 508 | 175 | 950 | 0.1 | 0.05 | 36.8 | 99.58 | ○ |
| Example 509 | 175 | 1050 | 0.1 | 0.05 | 33.3 | 99.50 | ○ |
| Example 510 | 200 | 1050 | 0.1 | 0.05 | 38.1 | 98.69 | × |
| Example 511 | 200 | 1180 | 0.1 | 0.05 | 33.9 | 99.88 | ● |
| Example 512 | 200 | 1180 | 0.1 | 0.05 | 33.9 | 99.74 | ● |
| Example 513 | 200 | 1130 | 0.1 | 0.05 | 35.4 | 99.88 | ● |
| Example 514 | 200 | 1270 | 0.1 | 0.05 | 31.5 | 99.46 | ○ |
| Example 515 | 200 | 1290 | 0.1 | 0.05 | 31 | 99.42 | ○ |
| Example 516 | 200 | 1150 | 0.1 | 0.05 | 34.8 | 98.35 | × |
| Example 517 | 200 | 1350 | 0.1 | 0.05 | 29.6 | 96.41 | × |
| Example 518 | 200 | 1380 | 0.1 | 0.05 | 29 | 98.77 | × |
| Example 519 | 200 | 1250 | 0.1 | 0.05 | 32 | 97.39 | × |
| Example 520 | 200 | 750 | 0.1 | 0.05 | 53.3 | 100.30 | ● |
| Example 521 | 200 | 850 | 0.1 | 0.05 | 47.1 | 100.05 | ● |
| Example 522 | 200 | 950 | 0.1 | 0.05 | 42.1 | 99.98 | ● |
| Example 523 | 200 | 650 | 0.1 | 0.05 | 61.5 | 99.72 | ● |
| Example 524 | 200 | 1180 | 0.1 | 0.05 | 33.9 | 99.92 | ● |
| Example 525 | 200 | 1150 | 0.1 | 0.05 | 34.8 | 99.91 | ● |
| Example 526 | 200 | 1180 | 0.1 | 0.05 | 33.9 | 99.87 | ● |
| Example 527 | 200 | 1130 | 0.1 | 0.05 | 35.4 | 99.84 | ● |
| Example 528 | 200 | 1160 | 0.1 | 0.05 | 34.5 | 99.62 | ○ |

**[Table 9]**

| | Relative Density % RD | Determination | ISO25178 Sq (µm) | Function Parameter Sxp (µm) | Composite Parameter Sdq | Functional Parameter Vm (mm³/mm²) | Volume Vv (mm³/mm²) | Vmp (mm³/mm²) | Vvc (mm³/mm²) | Vvv (mm³/mm²) | Functional Sk (µm) | Parameters Svk (µm) |
|---|---|---|---|---|---|---|---|---|---|---|---|---|
| Example 501 | 97.31 | × | 26.45 | 54.2 | 3.27 | 0.00134 | 0.03395 | 0.00134 | 0.0307 | 0.00326 | 44.5 | 28.9 |
| Example 502 | 98.09 | × | 23.8 | 49.85 | 2.905 | 0.001195 | 0.0299 | 0.001195 | 0.02685 | 0.003045 | 45.7 | 27.35 |
| Example 503 | 96.46 | × | 25.1 | 50 | 2.35 | 0.0013 | 0.0329 | 0.0013 | 0.0299 | 0.00301 | 50 | 28.3 |
| Example 504 | 98.59 | × | 23.7 | 51.9 | 2.54 | 0.00108 | 0.0297 | 0.00108 | 0.0266 | 0.00312 | 46.6 | 28.8 |
| Example 505 | 99.99 | ● | 18.4 | 36.7 | 2.2 | 0.000948 | 0.024 | 0.000948 | 0.0217 | 0.00231 | 20.9 | 13.7 |
| Example 506 | 99.79 | ● | 20.3 | 35.9 | 1.13 | 0.00134 | 0.026 | 0.00134 | 0.0239 | 0.00214 | 24.3 | 14.6 |
| Example 507 | 99.95 | ● | 16.2 | 31.3 | 1.29 | 0.000907 | 0.021 | 0.000907 | 0.0191 | 0.00189 | 23.9 | 11.6 |
| Example 508 | 99.58 | ○ | 17.5 | 33.6 | 1.83 | 0.000889 | 0.0231 | 0.000889 | 0.0211 | 0.002 | 25.6 | 15.9 |
| Example 509 | 99.50 | ○ | 25.1 | 50 | 2.35 | 0.0013 | 0.0329 | 0.0013 | 0.0299 | 0.00301 | 50 | 28.3 |
| Example 510 | 98.69 | × | 31.2 | 54.3 | 3.21 | 0.00246 | 0.038 | 0.00246 | 0.0349 | 0.00307 | 41.4 | 21.8 |
| Example 511 | 99.88 | ● | 20.9 | 38 | 2.03 | 0.00136 | 0.0267 | 0.00136 | 0.0244 | 0.00223 | 35.7 | 19 |
| Example 512 | 99.74 | ● | 19.7 | 36.9 | 1.66 | 0.0012 | 0.0254 | 0.0012 | 0.0232 | 0.00218 | 33.7 | 17.2 |
| Example 513 | 99.88 | ● | 19.7 | 38.55 | 2.17 | 0.00109 | 0.0254 | 0.00109 | 0.02315 | 0.00228 | 34.35 | 19 |
| Example 514 | 99.46 | ○ | 20.6 | 42.3 | 2.61 | 0.00111 | 0.0263 | 0.00111 | 0.0237 | 0.00258 | 37 | 22.6 |
| Example 515 | 99.42 | ○ | 21.4 | 44.2 | 2.21 | 0.00108 | 0.0272 | 0.00108 | 0.0245 | 0.00269 | 39.7 | 23.5 |
| Example 516 | 98.35 | × | 31.8 | 57.3 | 3.1 | 0.00212 | 0.0409 | 0.00212 | 0.0375 | 0.00341 | 52.3 | 30.7 |
| Example 517 | 96.41 | × | 40.9 | 75.5 | 4.76 | 0.00284 | 0.0527 | 0.00284 | 0.0481 | 0.00453 | 68.3 | 43.4 |
| Example 518 | 98.77 | × | 22.75 | 47.65 | 2.85 | 0.00113 | 0.02895 | 0.00113 | 0.02605 | 0.0029 | 43.35 | 26.45 |
| Example 519 | 97.39 | × | 36.75 | 62.65 | 4.11 | 0.00289 | 0.04705 | 0.00285 | 0.04325 | 0.003805 | 58 | 36.55 |
| Example 520 | 100.30 | ● | 10.6 | 18 | 1.15 | 0.000604 | 0.0138 | 0.000604 | 0.0128 | 0.00105 | 13.4 | 10.1 |
| Example 521 | 100.05 | ● | 11.3 | 19.7 | 1.41 | 0.000681 | 0.0147 | 0.000681 | 0.0136 | 0.00116 | 15.3 | 10.4 |
| Example 522 | 99.98 | ● | 16.2 | 29.9 | 1.63 | 0.000957 | 0.0186 | 0.000957 | 0.0167 | 0.0019 | 18.2 | 11.5 |
| Example 523 | 99.72 | ● | 22.6 | 43.2 | 1.26 | 0.00136 | 0.0292 | 0.00136 | 0.0266 | 0.00263 | 26 | 14.6 |
| Example 524 | 99.92 | ● | 20.5 | 37 | 1.54 | 0.00127 | 0.0268 | 0.00127 | 0.0246 | 0.00216 | 33.5 | 19.2 |
| Example 525 | 99.91 | ● | 21.6 | 39.4 | 1.61 | 0.00129 | 0.0278 | 0.00129 | 0.0255 | 0.00228 | 33.8 | 19.7 |
| Example 526 | 99.87 | ● | 20.7 | 39.1 | 1.55 | 0.00128 | 0.0266 | 0.00128 | 0.0242 | 0.00234 | 35.2 | 20.1 |
| Example 527 | 99.84 | ● | 19.8 | 39.4 | 1.72 | 0.0011 | 0.0251 | 0.0011 | 0.0227 | 0.00238 | 34 | 20.2 |
| Example 528 | 99.62 | ○ | 20.7 | 40.1 | 2.01 | 0.00117 | 0.0263 | 0.00117 | 0.0238 | 0.00245 | 36.5 | 22.7 |

**[Table 10]**

| | Laser Power W | Scan Speed mm/s | Hatch Distance mm | Lamination Thickness mm | Energy Density J/mm³ | Relative Density % | Determination |
|---|---|---|---|---|---|---|---|
| | P(W) | SS | dy | dz | E | RD | |
| Example 529 | 225 | 1050 | 0.1 | 0.05 | 42.9 | 99.24 | Δ |
| Example 530 | 225 | 1150 | 0.1 | 0.05 | 39.1 | 99.11 | Δ |
| Example 531 | 225 | 590 | 0.1 | 0.05 | 76.3 | 100.04 | ● |
| Example 532 | 225 | 570 | 0.1 | 0.05 | 78.9 | 100.02 | ● |
| Example 533 | 225 | 1250 | 0.1 | 0.05 | 36 | 98.92 | × |
| Example 534 | 225 | 615 | 0.1 | 0.05 | 73.2 | 100.01 | ● |
| Example 535 | 225 | 550 | 0.1 | 0.05 | 81.8 | 99.88 | ● |
| Example 536 | 225 | 850 | 0.1 | 0.05 | 52.9 | 99.83 | ● |
| Example 537 | 225 | 1350 | 0.1 | 0.05 | 33.3 | 98.37 | × |
| Example 538 | 225 | 950 | 0.1 | 0.05 | 47.4 | 99.94 | ● |
| Example 539 | 225 | 750 | 0.1 | 0.05 | 60 | 100.13 | ● |
| Example 540 | 225 | 650 | 0.1 | 0.05 | 69.2 | 100.04 | ● |
| Example 541 | 225 | 1350 | 0.1 | 0.05 | 33.3 | 99.66 | ○ |
| Example 542 | 250 | 1050 | 0.1 | 0.05 | 47.6 | 99.37 | Δ |
| Example 543 | 250 | 1150 | 0.1 | 0.05 | 43.5 | 99.40 | ○ |
| Example 544 | 250 | 1250 | 0.1 | 0.05 | 40 | 99.33 | Δ |
| Example 545 | 250 | 1350 | 0.1 | 0.05 | 37 | 98.93 | × |
| Example 546 | 250 | 750 | 0.1 | 0.05 | 66.7 | 100.05 | ● |
| Example 547 | 250 | 650 | 0.1 | 0.05 | 76.9 | 100.04 | ● |
| Example 548 | 250 | 850 | 0.1 | 0.05 | 58.8 | 99.76 | ● |
| Example 549 | 250 | 950 | 0.1 | 0.05 | 52.6 | 99.86 | ● |
| Example 550 | 250 | 1150 | 0.1 | 0.05 | 43.5 | 100.09 | ● |
| Example 551 | 275 | 1050 | 0.1 | 0.05 | 52.4 | 99.36 | Δ |
| Example 552 | 275 | 1150 | 0.1 | 0.05 | 47.8 | 99.38 | Δ |
| Example 553 | 275 | 1250 | 0.1 | 0.05 | 44 | 99.31 | Δ |
| Example 554 | 275 | 1350 | 0.1 | 0.05 | 40.7 | 99.33 | Δ |
| Example 555 | 275 | 850 | 0.1 | 0.05 | 64.7 | 99.85 | ● |
| Example 556 | 275 | 950 | 0.1 | 0.05 | 57.9 | 99.92 | ● |
| Example 557 | 275 | 750 | 0.1 | 0.05 | 73.3 | 100.07 | ● |

**[Table 11]**

| | Relative Density % RD | Determination | ISO25178 Sq (µm) | Function Parameter Sxp (µm) | Composite Parameter Sdq | Functional Parameter Vm (mm³/mm²) | Volume Vv (mm³/mm²) | Vmp (mm³/mm²) | Vvc (mm³/mm²) | Vvv (mm³/mm²) | Functional Sk (µm) | Parameters Svk (µm) |
|---|---|---|---|---|---|---|---|---|---|---|---|---|
| Example 529 | 99.24 | Δ | 29.9 | 48.6 | 3.45 | 0.00245 | 0.0377 | 0.00245 | 0.0349 | 0.00277 | 36 | 15.2 |
| Example 530 | 99.11 | Δ | 26.5 | 44.9 | 2.35 | 0.00197 | 0.0339 | 0.00197 | 0.0313 | 0.00255 | 38.2 | 16.6 |
| Example 531 | 100.04 | ● | 19.4 | 43.5 | 0.831 | 0.000575 | 0.0241 | 0.000575 | 0.0216 | 0.0025 | 13.5 | 9.32 |
| Example 532 | 100.02 | ● | 17.3 | 36.9 | 0.844 | 0.000693 | 0.0222 | 0.000693 | 0.0201 | 0.0021 | 14.6 | 6.77 |
| Example 533 | 98.92 | × | 26.7 | 44.6 | 1.93 | 0.00188 | 0.0355 | 0.00188 | 0.033 | 0.00248 | 37.5 | 15.5 |
| Example 534 | 100.01 | ● | 13.2 | 27.7 | 0.987 | 0.000571 | 0.0168 | 0.000571 | 0.0152 | 0.00161 | 13.6 | 9.59 |
| Example 535 | 99.88 | ● | 29.4 | 53 | 1.12 | 0.00143 | 0.0403 | 0.00143 | 0.0371 | 0.00322 | 18.5 | 9.59 |
| Example 536 | 99.83 | ● | 11.5 | 26.8 | 1 | 0.000558 | 0.0132 | 0.000558 | 0.0114 | 0.00178 | 13.5 | 7.97 |
| Example 537 | 98.37 | × | 36.45 | 66.45 | 3.935 | 0.00232 | 0.0478 | 0.002335 | 0.0439 | 0.00392 | 60.3 | 32.4 |
| Example 538 | 99.94 | ● | 11.2 | 24.3 | 1.15 | 0.000585 | 0.0139 | 0.000585 | 0.0124 | 0.00152 | 14.4 | 8.8 |
| Example 539 | 100.13 | ● | 13.6 | 24.4 | 1.22 | 0.000867 | 0.0171 | 0.000867 | 0.0157 | 0.00141 | 17.5 | 10.5 |
| Example 540 | 100.04 | ● | 9.73 | 18.5 | 0.991 | 0.000505 | 0.0126 | 0.000505 | 0.0115 | 0.00108 | 12.2 | 7.44 |
| Example 541 | 99.66 | ○ | 21.3 | 42.2 | 1.77 | 0.00114 | 0.0274 | 0.00114 | 0.0249 | 0.00253 | 38 | 23.6 |
| Example 542 | 99.37 | Δ | 28.0 | 45.4 | 2.37 | 0.00218 | 0.0361 | 0.00218 | 0.0336 | 0.00257 | 33.7 | 14.7 |
| Example 543 | 99.40 | ○ | 36.1 | 65.5 | 3.18 | 0.00284 | 0.0438 | 0.00284 | 0.0401 | 0.00377 | 48.5 | 25.1 |
| Example 544 | 99.33 | Δ | 26.3 | 42.4 | 2.31 | 0.00196 | 0.0345 | 0.00196 | 0.0321 | 0.00241 | 33.4 | 14.1 |
| Example 545 | 98.93 | × | 32.9 | 52.2 | 3.44 | 0.00277 | 0.042 | 0.00277 | 0.0391 | 0.00295 | 47.1 | 23.2 |
| Example 546 | 100.05 | ● | 11.9 | 31.5 | 0.85 | 0.00044 | 0.0139 | 0.00044 | 0.0118 | 0.00207 | 12.5 | 7.05 |
| Example 547 | 100.04 | ● | 12.7 | 25.3 | 1.01 | 0.000608 | 0.0163 | 0.000608 | 0.0148 | 0.00154 | 14.6 | 9.46 |
| Example 548 | 99.76 | ● | 8.7 | 16.6 | 1.02 | 0.000496 | 0.0112 | 0.000496 | 0.0102 | 0.00102 | 12.3 | 8.94 |
| Example 549 | 99.86 | ● | 8.17 | 13.9 | 1.17 | 0.000496 | 0.0109 | 0.000496 | 0.01 | 0.000823 | 12.1 | 8.13 |
| Example 550 | 100.09 | ● | 16.4 | 31.7 | 1.29 | 0.00103 | 0.0206 | 0.00103 | 0.0187 | 0.00187 | 21 | 13.3 |
| Example 551 | 99.36 | Δ | 32.3 | 57.9 | 2.98 | 0.00248 | 0.0395 | 0.00248 | 0.0361 | 0.00338 | 46.2 | 20.4 |
| Example 552 | 99.38 | Δ | 31.7 | 54.8 | 2.93 | 0.00259 | 0.039 | 0.00259 | 0.0357 | 0.00327 | 42.1 | 19.9 |
| Example 553 | 99.31 | Δ | 34.2 | 53.9 | 3.31 | 0.00259 | 0.0445 | 0.00259 | 0.0415 | 0.00303 | 45.9 | 22 |
| Example 554 | 99.33 | Δ | 23.7 | 43 | 2.16 | 0.00145 | 0.0304 | 0.00145 | 0.0279 | 0.00246 | 35.8 | 18.7 |
| Example 555 | 99.85 | ● | 10.3 | 18.4 | 0.845 | 0.000511 | 0.014 | 0.000511 | 0.013 | 0.001 | 11.1 | 8.13 |
| Example 556 | 99.92 | ● | 16.0 | 44.8 | 0.909 | 0.000536 | 0.0167 | 0.000536 | 0.0132 | 0.00351 | 11.6 | 8.25 |
| Example 557 | 100.07 | ● | 11.7 | 22.8 | 1.06 | 0.000645 | 0.0154 | 0.000645 | 0.014 | 0.0014 | 15.2 | 10.3 |

**[Table 12]**

| | Laser Power W P(W) | Scan Speed mm/s SS | Hatch Distance mm dy | Lamination Thickness mm dz | Energy Density J/mm³ E | Relative Density % RD | Determination |
|---|---|---|---|---|---|---|---|
| Example 558 | 300 | 1050 | 0.1 | 0.05 | 57.1 | 99.42 | ○ |
| Example 559 | 300 | 1150 | 0.1 | 0.05 | 52.2 | 99.34 | Δ |
| Example 560 | 300 | 1250 | 0.1 | 0.05 | 48 | 99.32 | Δ |
| Example 561 | 300 | 1350 | 0.1 | 0.05 | 44.4 | 99.35 | Δ |
| Example 562 | 300 | 850 | 0.1 | 0.05 | 70.6 | 100.03 | ● |
| Example 563 | 300 | 750 | 0.1 | 0.05 | 80 | 100.05 | ● |
| Example 564 | 300 | 950 | 0.1 | 0.05 | 63.2 | 99.86 | ● |
| Example 565 | 300 | 1350 | 0.1 | 0.05 | 44.4 | 100.17 | ● |
| Example 566 | 325 | 1150 | 0.1 | 0.05 | 56.5 | 99.61 | ○ |
| Example 567 | 325 | 1050 | 0.1 | 0.05 | 61.9 | 99.46 | ○ |
| Example 568 | 325 | 1250 | 0.1 | 0.05 | 52 | 99.67 | ○ |
| Example 569 | 325 | 1350 | 0.1 | 0.05 | 48.1 | 99.51 | ○ |
| Example 570 | 325 | 950 | 0.1 | 0.05 | 68.4 | 99.98 | ● |
| Example 571 | 325 | 850 | 0.1 | 0.05 | 76.5 | 100.11 | ● |
| Example 572 | 325 | 1450 | 0.1 | 0.05 | 44.8 | 100.04 | ● |
| Example 573 | 350 | 1050 | 0.1 | 0.05 | 66.7 | 100.03 | ● |
| Example 574 | 350 | 850 | 0.1 | 0.05 | 82.4 | 100.04 | ● |
| Example 575 | 350 | 1150 | 0.1 | 0.05 | 60.9 | 100.16 | ● |
| Example 576 | 350 | 1350 | 0.1 | 0.05 | 51.9 | 99.57 | ○ |
| Example 577 | 350 | 1250 | 0.1 | 0.05 | 56 | 100.02 | ● |
| Example 578 | 350 | 1550 | 0.1 | 0.05 | 45.2 | 99.88 | ● |
| Example 579 | 375 | 950 | 0.1 | 0.05 | 78.9 | 100.08 | ● |
| Example 580 | 375 | 1050 | 0.1 | 0.05 | 71.4 | 99.98 | ● |
| Example 581 | 375 | 1150 | 0.1 | 0.05 | 65.2 | 99.89 | ● |
| Example 582 | 375 | 2150 | 0.1 | 0.05 | 34.9 | 99.02 | Δ |
| Example 583 | 375 | 1250 | 0.1 | 0.05 | 60 | 99.76 | ● |
| Example 584 | 375 | 1350 | 0.1 | 0.05 | 55.6 | 99.71 | ● |
| Example 585 | 400 | 1050 | 0.1 | 0.05 | 76.2 | 100.01 | ● |
| Example 586 | 400 | 1150 | 0.1 | 0.05 | 69.6 | 100.01 | ● |
| Example 587 | 400 | 1250 | 0.1 | 0.05 | 64 | 99.96 | ● |
| Example 588 | 400 | 1350 | 0.1 | 0.05 | 59.3 | 99.84 | ● |

**[Table 13]**

| | Relative Density % RD | Determination | ISO25178 Sq (µm) | Function Parameter Sxp (µm) | Composite Parameter Sdq | Functional Parameter Vm (mm³/mm²) | Volume Vv (mm³/mm²) | Vmp (mm³/mm²) | Vvc (mm³/mm²) | Vvv (mm³/mm²) | Functional Sk (µm) | Parameters Svk (µm) |
|---|---|---|---|---|---|---|---|---|---|---|---|---|
| Example 558 | 99.42 | ○ | 28.7 | 51.8 | 2.44 | 0.00204 | 0.0366 | 0.00204 | 0.0335 | 0.00312 | 42.4 | 21.5 |
| Example 559 | 99.34 | Δ | 31.5 | 51.15 | 2.765 | 0.002285 | 0.04165 | 0.002285 | 0.0387 | 0.002925 | 45.1 | 22.75 |
| Example 560 | 99.32 | Δ | 32.2 | 55.05 | 2.955 | 0.00259 | 0.0392 | 0.0027 | 0.0359 | 0.00328 | 42.05 | 20.1 |
| Example 561 | 99.35 | Δ | 29.4 | 53.6 | 2.8 | 0.00201 | 0.0376 | 0.00201 | 0.0345 | 0.00312 | 45.6 | 22.8 |
| Example 562 | 100.03 | ● | 9.95 | 17.5 | 1.33 | 0.000543 | 0.0136 | 0.000543 | 0.0125 | 0.00105 | 11.5 | 9.51 |
| Example 563 | 100.05 | ● | 9.82 | 18.9 | 1.31 | 0.000493 | 0.0125 | 0.000493 | 0.0114 | 0.00116 | 12.9 | 10.3 |
| Example 564 | 99.86 | ● | 11.4 | 22.7 | 0.967 | 0.000594 | 0.0147 | 0.000594 | 0.0133 | 0.00139 | 11.8 | 9.32 |
| Example 565 | 100.17 | ● | 19.5 | 36.8 | 1.5 | 0.00121 | 0.0245 | 0.00121 | 0.0222 | 0.00224 | 30.5 | 17.7 |
| Example 566 | 99.61 | ○ | 28.6 | 50.2 | 2.505 | 0.00201 | 0.0369 | 0.00201 | 0.0339 | 0.00296 | 41.35 | 21.4 |
| Example 567 | 99.46 | ○ | 30.05 | 49.25 | 2.775 | 0.00215 | 0.0398 | 0.002125 | 0.037 | 0.00281 | 36.7 | 16.35 |
| Example 568 | 99.67 | ○ | 30.9 | 54.3 | 3.095 | 0.00246 | 0.0379 | 0.002405 | 0.0348 | 0.003075 | 40.9 | 21.85 |
| Example 569 | 99.51 | ○ | 35.8 | 61.9 | 3.35 | 0.00237 | 0.0472 | 0.00237 | 0.0438 | 0.00342 | 51 | 24.8 |
| Example 570 | 99.98 | ● | 11.2 | 18.2 | 0.925 | 0.000582 | 0.0154 | 0.000582 | 0.0144 | 0.000987 | 12.1 | 6.48 |
| Example 571 | 100.11 | ● | 16.8 | 33.9 | 0.96 | 0.000751 | 0.0219 | 0.000751 | 0.0199 | 0.00199 | 14.7 | 8.61 |
| Example 572 | 100.04 | ● | 25.2 | 45.8 | 1.9 | 0.0016 | 0.0319 | 0.0016 | 0.0292 | 0.00266 | 39.9 | 19.4 |
| Example 573 | 100.03 | ● | 9.55 | 18.3 | 0.73 | 0.00049 | 0.0129 | 0.00049 | 0.0117 | 0.00118 | 11.4 | 6.6 |
| Example 574 | 100.04 | ● | 15.3 | 31.7 | 0.877 | 0.000561 | 0.0201 | 0.000561 | 0.0182 | 0.00192 | 12.6 | 8.42 |
| Example 575 | 100.16 | ● | 13.5 | 24.4 | 1.02 | 0.000841 | 0.0172 | 0.000841 | 0.0158 | 0.00144 | 15 | 9.84 |
| Example 576 | 99.57 | ○ | 22.2 | 41 | 1.35 | 0.00147 | 0.0284 | 0.00147 | 0.026 | 0.00242 | 33.3 | 16.5 |
| Example 577 | 100.02 | ● | 20.4 | 39.1 | 2.31 | 0.00103 | 0.0266 | 0.00103 | 0.0243 | 0.00231 | 31.1 | 18.1 |
| Example 578 | 99.88 | ● | 22.1 | 42.2 | 2 | 0.00129 | 0.0287 | 0.00129 | 0.0262 | 0.00251 | 38.9 | 21 |
| Example 579 | 100.08 | ● | 19.0 | 43.8 | 1.02 | 0.000882 | 0.0231 | 0.000882 | 0.0204 | 0.00275 | 12.4 | 8.03 |
| Example 580 | 99.98 | ● | 20.3 | 36.4 | 1.03 | 0.00085 | 0.0273 | 0.00085 | 0.0255 | 0.00179 | 13.4 | 8.47 |
| Example 581 | 99.89 | ● | 12.7 | 22.3 | 0.982 | 0.000722 | 0.0171 | 0.000722 | 0.0158 | 0.00129 | 12.8 | 7.29 |
| Example 582 | 99.02 | Δ | 24.8 | 49.3 | 2.43 | 0.00132 | 0.0321 | 0.00132 | 0.0292 | 0.00293 | 44.9 | 26.04 |
| Example 583 | 99.76 | ● | 17.7 | 37.6 | 1.99 | 0.000799 | 0.0225 | 0.000799 | 0.0202 | 0.0023 | 26.5 | 15.2 |
| Example 584 | 99.71 | ● | 23.9 | 47 | 3.09 | 0.00104 | 0.0318 | 0.00104 | 0.0291 | 0.00278 | 35.9 | 18.5 |
| Example 585 | 100.01 | ● | 17.3 | 35.7 | 1.07 | 0.000872 | 0.0221 | 0.000872 | 0.0199 | 0.00217 | 14.7 | 9.81 |
| Example 586 | 100.01 | ● | 15.4 | 26.1 | 1.02 | 0.000957 | 0.0213 | 0.000957 | 0.0198 | 0.00152 | 15.8 | 11.3 |
| Example 587 | 99.96 | ● | 15.5 | 26.8 | 1.61 | 0.00101 | 0.0204 | 0.00101 | 0.0188 | 0.0016 | 20.5 | 13.1 |
| Example 588 | 99.84 | ● | 21.4 | 49.1 | 1.54 | 0.000799 | 0.0262 | 0.000799 | 0.0232 | 0.00295 | 31.1 | 19.2 |

### (Correlation Between Extracted Three-Dimensional Surface Texture Parameter and Relative Density)

Graphs each showing the correlation between the relative density (%) and each three-dimensional surface texture parameter from the experiment results shown in Tables 8 to 13 and the value of the correlation coefficient using the MIC will be described.

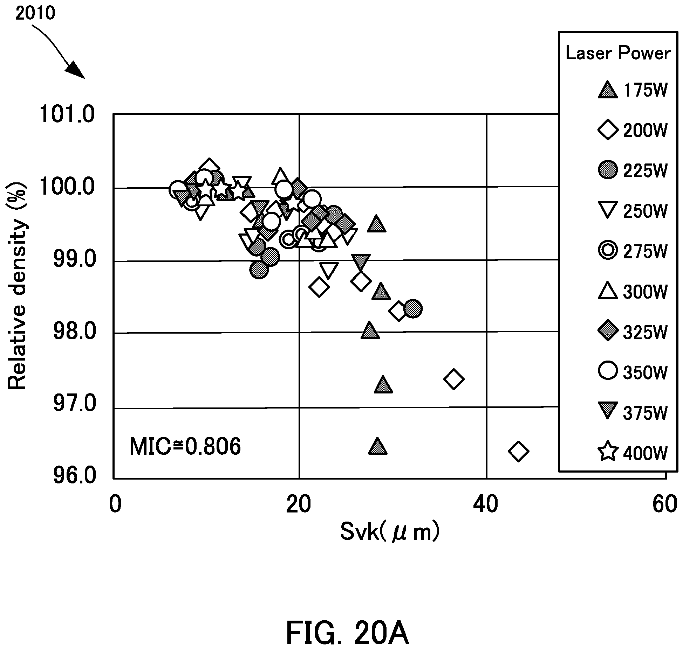

Fig. 20A is a graph 2010 showing the relation between the relative density (%) of the shaped object and the three-dimensional surface texture parameter Svk (µm). The MIC between the relative density (%) and Svk (µm) is 0.806. It is found that the relative density and Svk have an almost negative correlation. It is apparent from Fig. 20A that the density may become relatively low if the value of Svk is larger than a given value (for example, 13.7 µm). Therefore, it is possible to predict a decrease in the relative density of the shaping object from the value of Svk of the layer surface.

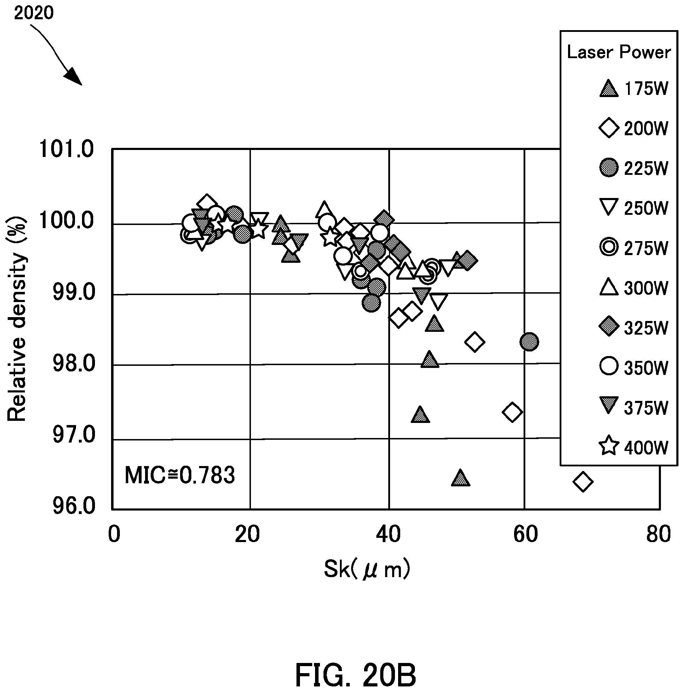

Fig. 20B is a graph 2020 showing the relation between the relative density (%) of the shaped object and the three-dimensional surface texture parameter Sk (µm). The MIC between the relative density (%) and Sk (µm) is 0.783. It is found that the relative density and Sk have an almost negative correlation. It is apparent from Fig. 20B that the density may become relatively low if the value of Sk is larger than a given value (for example, 26.5 µm). Therefore, it is possible to predict a decrease in the relative density of the shaping object from the value of Sk of the layer surface.

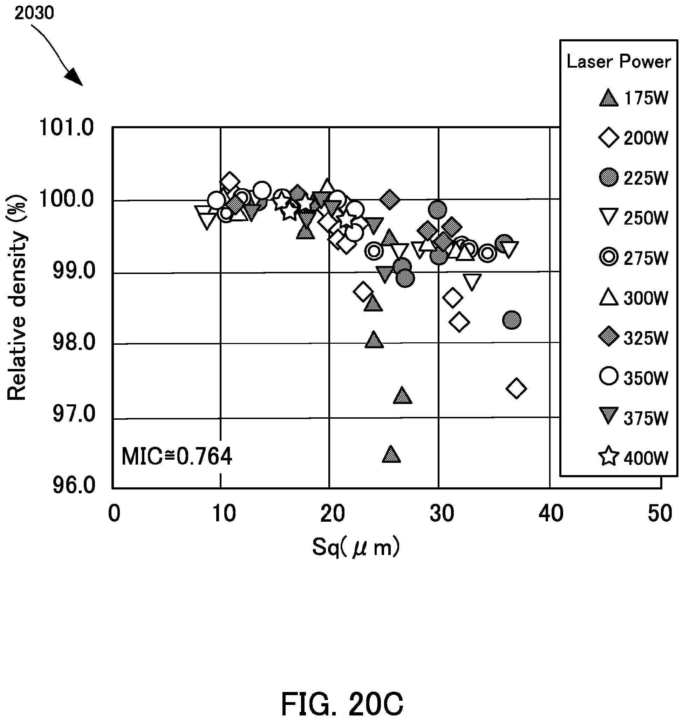

Fig. 20C is a graph 2030 showing the relation between the relative density (%) of the shaped object and the three-dimensional surface texture parameter Sq (µm). The MIC between the relative density (%) and Sq (µm) is 0.764. It is found that the relative density and Sq have an almost negative correlation. It is apparent from Fig. 20C that the density may become relatively low if the value of Sq is larger than a given value (for example, 17.3 µm). Therefore, it is possible to predict a decrease in the relative density of the shaping object from the value of Sq of the layer surface.

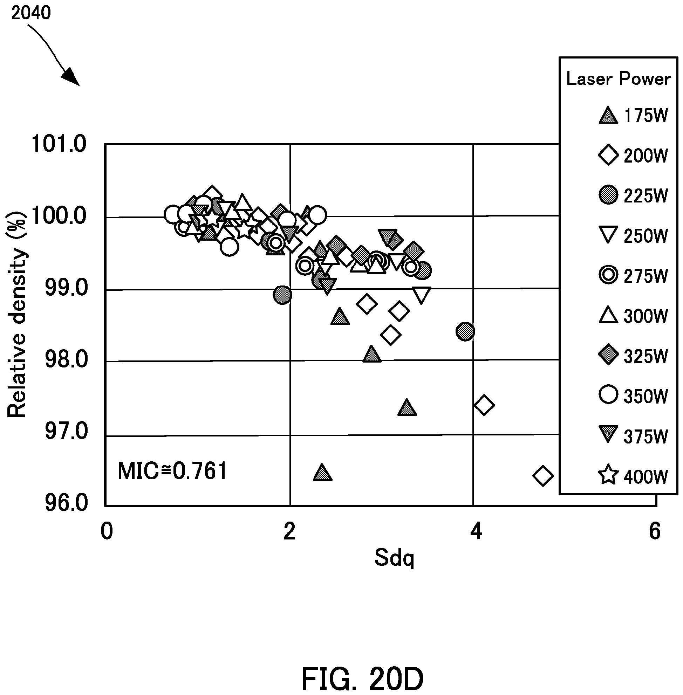

Fig. 20D is a graph 2040 showing the relation between the relative density (%) of the shaped object and the three-dimensional surface texture parameter Sdq. The MIC between the relative density (%) and Sdq is 0.761. It is found that the relative density and Sdq have an almost negative correlation. It is apparent from Fig. 20D that the density may become relatively low if the value of Sdq is larger than a given value (for example, 1.17). Therefore, it is possible to predict a decrease in the relative density of the shaping object from the value of Sdq of the layer surface.

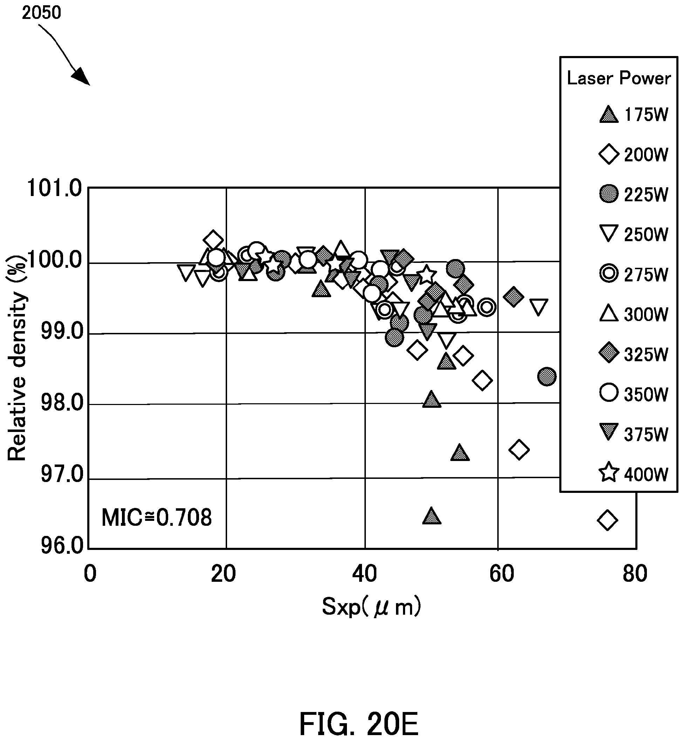

Fig. 20E is a graph 2050 showing the relation between the relative density (%) of the shaped object and the three-dimensional surface texture parameter Sxp (µm). The MIC between the relative density (%) and Sxp (µm) is 0.708. It is found that the relative density and Sxp have an almost negative correlation. It is apparent from Fig. 20E that the density may become relatively low if the value of Sxp is larger than a given value (for example, 31.7 µm). Therefore, it is possible to predict a decrease in the relative density of the shaping object from the value of Sxp of the layer surface.

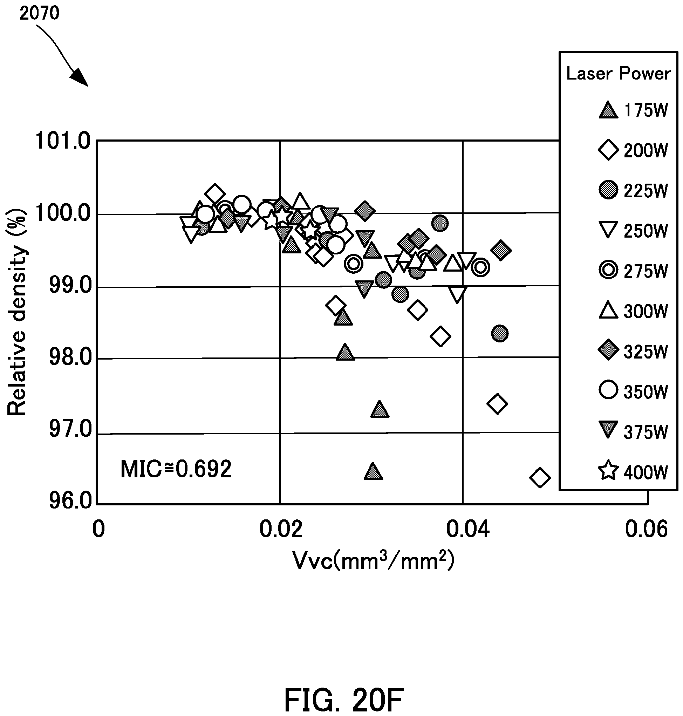

Fig. 20F is a graph 2070 showing the relation between the relative density (%) of the shaped object and the three-dimensional surface texture parameter Vvc (mm³/mm²). The MIC between the relative density (%) and Vvc (mm³/mm²) is 0.692. It is found that the relative density and Vvc have an almost negative correlation. It is apparent from Fig. 20F that the density may become relatively low if the value of Vvc is larger than a given value (for example, 0.0199 mm³/mm²). Therefore, it is possible to predict a decrease in the relative density of the shaping object from the value of Vvc of the layer surface.

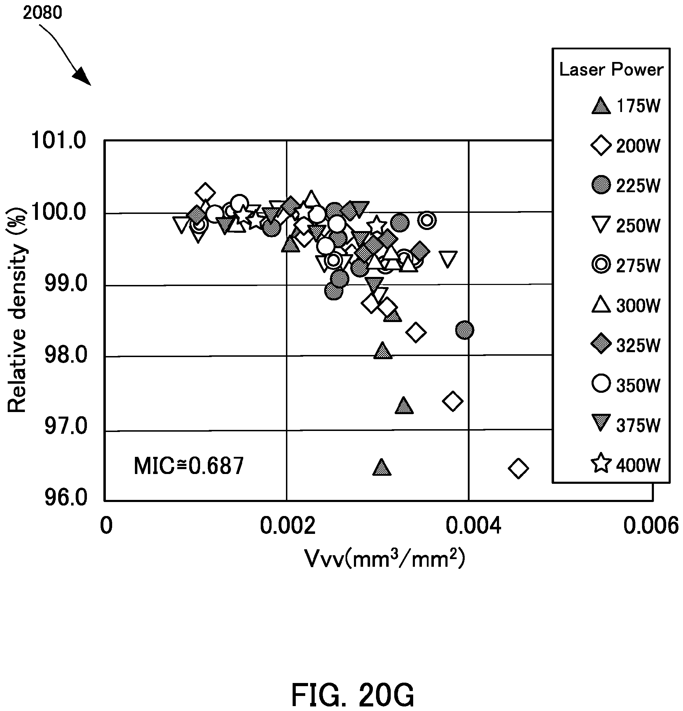

Fig. 20G is a graph 2080 showing the relation between the relative density (%) of the shaped object and the three-dimensional surface texture parameter Vvv (mm³/mm²). The MIC between the relative density (%) and Vvv (mm³/mm²) is 0.687. It is found that the relative density and Vvv have an almost negative correlation. It is apparent from Fig. 20G that the density may become relatively low if the value of Vvv is larger than a given value (for example, 0.00179 mm³/mm²). Therefore, it is possible to predict a decrease in the relative density of the shaping object from the value of Vvv of the layer surface.

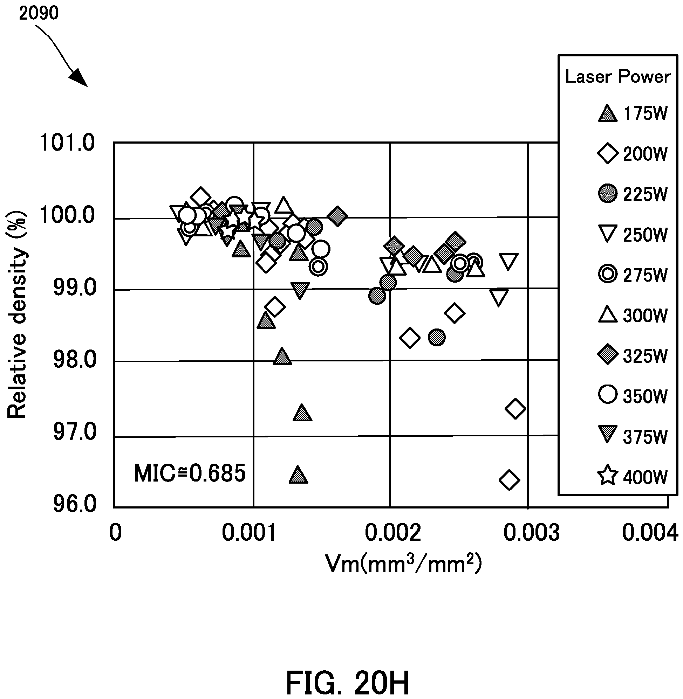

Fig. 20H is a graph 2090 showing the relation between the relative density (%) of the shaped object and the three-dimensional surface texture parameter Vm (mm³/mm²). The MIC between the relative density (%) and Vm (mm³/mm²) is 0.685. It is found that the relative density and Vm have an almost negative correlation. It is apparent from Fig. 20H that the density may become relatively low if the value of Vm is larger than a given value (for example, 0.000799 mm³/mm²). Therefore, it is possible to predict a decrease in the relative density of the shaping object from the value of Vm of the layer surface.

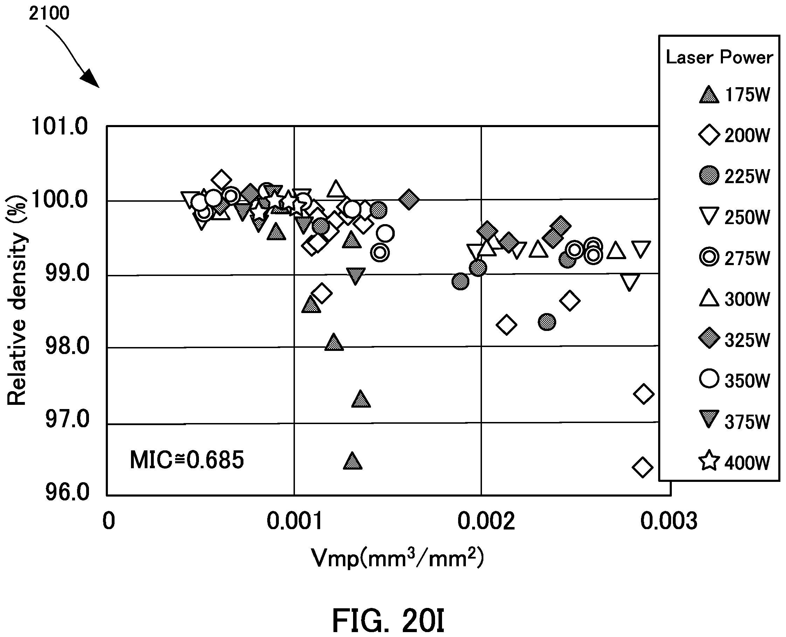

Fig. 20I is a graph 2100 showing the relation between the relative density (%) of the shaped object and the three-dimensional surface texture parameter Vmp (mm³/mm²). The MIC between the relative density (%) and Vmp (mm³/mm²) is 0.685. It is found that the relative density and Vmp have an almost negative correlation. It is apparent from Fig. 20I that the density may become relatively low if the value of Vmp is larger than a given value (for example, 0.000799 mm³/mm²). Therefore, it is possible to predict a decrease in the relative density of the shaping object from the value of Vmp of the layer surface.

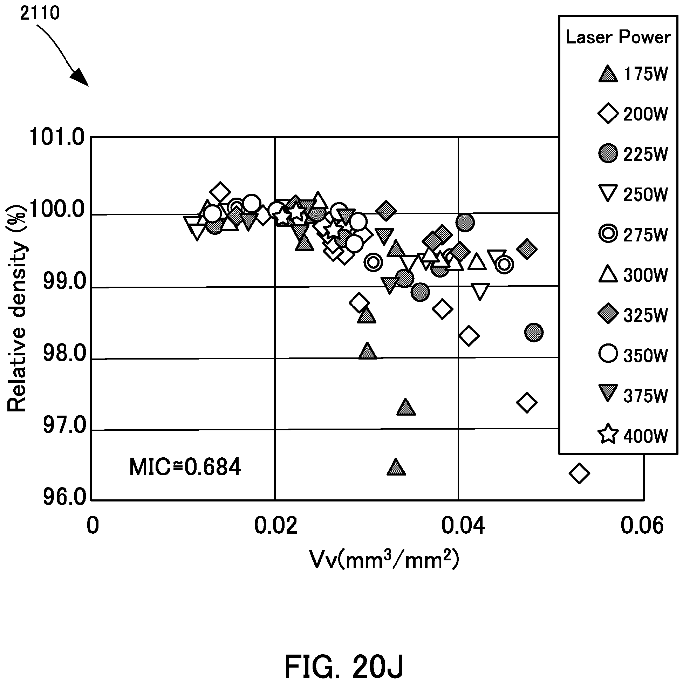

Fig. 20J is a graph 2110 showing the relation between the relative density (%) of the shaped object and the three-dimensional surface texture parameter Vv (mm³/mm²). The MIC between the relative density (%) and Vv (mm³/mm²) is 0.684. It is found that the relative density and Vv have an almost negative correlation. It is apparent from Fig. 20J that the density may become relatively low if the value of Vv is larger than a given value (for example, 0.0221 mm³/mm²). Therefore, it is possible to predict a decrease in the relative density of the shaping object from the value of Vv of the layer surface.

According to this example, it is found that the produced dale height (Svk (µm)), core height (Sk (µm)), root mean square height (Sq (µm)), root mean square gradient (Sdq), peak extreme height (Sxp (µm)), core void volume (Vvc (mm³/mm²)), dale void volume (Vvv (mm³/mm²)), material volume (Vm (mm³/mm²)), peak material volume (Vmp (mm³/mm²)), and void volume (Vv (mm³/mm²)) are also the three-dimensional surface texture parameters usable to predict the relative density of the shaping object.

Note that the three-dimensional surface texture parameters selected by this example are applicable to the procedure of the quality evaluation method for the laminating and shaping object shown in Fig. 3A. The three-dimensional surface texture parameters selected by this example are also usable to shape the laminating and shaping object in the laminating and shaping system shown in Fig. 4B.

### (Value of Sp)

Table 14 below shows the value of the three-dimensional surface texture parameter Sp (µm) calculated based on the experiment results of Examples 501 to 588.

**Table 141**

| | Relative Densty % | Determination | Sp (µm) |
|---|---|---|---|
| Example 501 | 97.31 | × | 233.5 |
| Example 502 | 98.09 | × | 223 |
| Example 503 | 96.46 | × | 306 |
| Example 504 | 98.59 | × | 111 |
| Example 505 | 99.99 | ● | 328 |
| Example 506 | 99.79 | ● | 268 |
| Example 507 | 99.95 | ● | 203 |
| Example 508 | 99.58 | ○ | 319 |
| Example 509 | 99.50 | ○ | 306 |
| Example 510 | 98.69 | × | 215 |
| Example 511 | 99.88 | ● | 158 |
| Example 512 | 99.74 | ● | 161 |
| Example 513 | 99.88 | ● | 226 |
| Example 514 | 99.46 | ○ | 170 |
| Example 515 | 99.42 | ○ | 127 |
| Example 516 | 98.35 | × | 166 |
| Example 517 | 96.41 | × | 210 |
| Example 518 | 98.77 | × | 222 |
| Example 519 | 97.39 | × | 20.5 |
| Example 520 | 100.30 | ● | 270 |
| Example 521 | 100.05 | ● | 303 |
| Example 522 | 99.98 | ● | 298 |
| Example 523 | 99.72 | ● | 298 |
| Example 524 | 99.92 | ● | 301 |
| Example 525 | 99.91 | ● | 293 |
| Example 526 | 99.87 | ● | 301 |
| Example 527 | 99.84 | ● | 301 |
| Example 528 | 99.62 | ○ | 305 |
| Example 529 | Δ | 99.24 | 202 |
| Example 530 | Δ | 99.11 | 202 |
| Example 531 | ● | 100.04 | 299 |
| Example 532 | ● | 100.02 | 289 |
| Example 533 | ● | 98.92 | 157 |
| Example 534 | ● | 100.01 | 304 |
| Example 535 | ● | 99.88 | 313 |
| Example 536 | ● | 99.83 | 221 |
| Example 537 | × | 98.37 | 245.5 |
| Example 538 | ● | 99.94 | 280 |
| Example 539 | ● | 100.13 | 299 |
| Example 540 | ● | 100.04 | 276 |
| Example 541 | ○ | 99.66 | 299 |
| Example 542 | Δ | 99.37 | 214 |
| Example 543 | ○ | 99.40 | 226 |
| Example 544 | Δ | 11.13 | 171 |
| Example 545 | × | 98.93 | 186 |
| Example 546 | ● | 100.05 | 285 |
| Example 547 | ● | 100.04 | 268 |
| Example 548 | ● | 99.76 | 306 |
| Example 549 | ● | 99.86 | 303 |
| Example 550 | ● | 100.09 | 318 |
| Example 551 | Δ | 99.36 | 219 |
| Example 552 | Δ | 99.38 | 232 |
| Example 553 | Δ | 99.31 | 214 |
| Example 554 | Δ | 99.33 | 187 |
| Example 555 | ● | 99.85 | 261 |
| Example 556 | ● | 99.92 | 293 |
| Example 557 | ● | 100.07 | 315 |
| Example 558 | 99.42 | ○ | 222 |
| Example 559 | 99.34 | Δ | 194 |
| Example 560 | 99.32 | Δ | 241.5 |
| Example 561 | 99.35 | Δ | 164 |
| Example 562 | 100.03 | ● | 304 |
| Example 563 | 100.05 | ● | 287 |
| Example 564 | 99.86 | ● | 269 |
| Example 565 | 100.17 | ● | 305 |
| Example 566 | 99.61 | ○ | 177.5 |
| Example 567 | 99.46 | ○ | 197 |
| Example 568 | 99.67 | ○ | 206.5 |
| Example 569 | 99.51 | ○ | 201 |
| Example 570 | 99.98 | ● | 276 |
| Example 571 | 100.11 | ● | 291 |
| Example 572 | 100.04 | ● | 284 |
| Example 573 | 100.03 | ● | 310 |
| Example 574 | 100.04 | ● | 250 |
| Example 575 | 100.16 | ● | 289 |
| Example 576 | 99.57 | ○ | 220 |
| Example 577 | 100.02 | ● | 315 |
| Example 578 | 99.88 | ● | 314 |
| Example 579 | 100.08 | ● | 325 |
| Example 580 | 99.98 | ● | 112 |
| Example 581 | 99.89 | ● | 242 |
| Example 582 | 99.02 | Δ | 217.5 |
| Example 583 | 99.76 | ● | 303 |
| Example 584 | 99.71 | ● | 133 |
| Example 585 | 100.01 | ● | 240 |
| Example 586 | 100.01 | ● | 305 |
| Example 587 | 99.96 | ● | 283 |
| Example 588 | 99.84 | ● | 266 |

### (Correlation Between Extracted Three-Dimensional Surface Texture Parameter Sp and Relative Density)

A graph showing the correlation between the relative density (%) and the three-dimensional surface texture parameter Sp from Table 14 and the value of the correlation coefficient using the MIC will be described next.

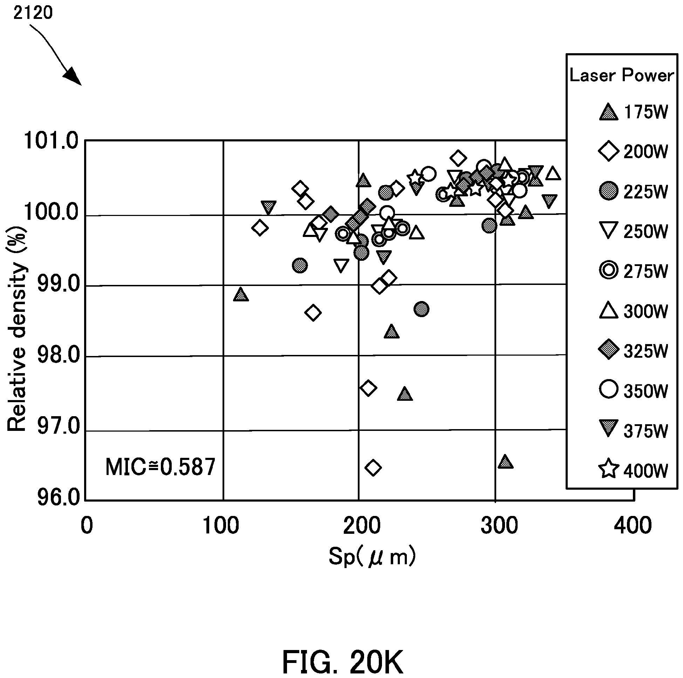

Fig. 20K is a graph 2120 showing the relation between the relative density (%) of the shaped object and the three-dimensional surface texture parameter Sp (µm). The MIC between the relative density (%) and Sp (µm) is 0.587. Therefore, this parameter was not used as the three-dimensional surface texture parameter for evaluating the shaping quality (shaping power).

### [Other Example Embodiments]

While the invention has been particularly shown and described with reference to example embodiments thereof, the invention is not limited to these example embodiments. It will be understood by those of ordinary skill in the art that various changes in form and details may be made therein without departing from the spirit and scope of the present invention as defined by the claims. A system or apparatus including any combination of the individual features included in the respective example embodiments may be incorporated in the scope of the present invention.

The present invention is applicable to a system including a plurality of devices or a single apparatus. The present invention is also applicable even when an information processing program for implementing the functions of example embodiments is supplied to the system or apparatus directly or from a remote site. Hence, the present invention also incorporates the program installed in a computer to implement the functions of the present invention by the computer, a medium storing the program, and a WWW (World Wide Web) server that causes a user to download the program. Especially, the present invention incorporates at least a non-transitory computer readable medium storing a program that causes a computer to execute processing steps included in the above-described example embodiments.

This application is based upon and claims the benefit of priority from International Patent Application No. PCT/JP2020/020406, filed on May 22, 2020, the disclosure of which is incorporated herein in its entirety by reference.

## Claims

1. A method of evaluating a quality of an object to be shaped during laminating and shaping, comprising:
acquiring three-dimensional point group data of a surface of a shaping obj ect;
calculating at least one of three-dimensional surface texture parameters extended to a plane region using the three-dimensional point group data in reduced dimension; and
evaluating the quality of the object to be shaped using the at least one of the three-dimensional surface texture parameters.

2. The method according to claim 1, wherein in the evaluating, a relative density of the object to be shaped is predicted from the at least one of the three-dimensional surface texture parameters, and the quality is evaluated based on the relative density.

3. The method according to claim 2, wherein the relative density is predicted based on a correlation, stored in advance, between the at least one of the three-dimensional surface texture parameters and the relative density.

4. The method according to any one of claims 1 to 3, wherein in the calculating, the at least one of the three-dimensional surface texture parameters is calculated based on a length of autocorrelation obtained from an autocorrelation function of the three-dimensional point group data.

5. The method according to claim 4, wherein the at least one of the three-dimensional surface texture parameters is a minimum length of the autocorrelation Sal of the surface.

6. The method according to any one of claims 1 to 5, wherein in the calculating, the at least one of the three-dimensional surface texture parameters is calculated based on a mean area of the three-dimensional point group data.

7. The method according to claim 6, wherein the at least one of the three-dimensional surface texture parameters includes a mean dale area Sda of the surface and a mean hill area Sha of the surface.

8. The method according to any one of claims 1 to 7, wherein the at least one of the three-dimensional surface texture parameters further includes a mean dale volume Sdv of the surface and a material ratio Smr2 of the surface for separating a dale portion and a core portion.

9. The method according to any one of claims 1 to 8, wherein the at least one of the three-dimensional surface texture parameters further includes a reduced dale height Svk of the surface, a core height Sk of the surface, a root mean square height Sq of the surface, a root mean square gradient Sdq of the surface, a peak extreme height Sxp of the surface, a core void volume Vvc of the surface, a dale void volume Vvv of the surface, a material volume Vm of the surface, a peak material volume Vmp of the surface, and a void volume Vv of the surface.

10. The method according to any one of claims 1 to 9, wherein in the evaluating, the quality is evaluated using a combination of at least two of the three-dimensional surface texture parameters.

11. The method according to any one of claims 1 to 10, wherein in the calculating, the at least one of the three-dimensional surface texture parameters is calculated within a shaping range of the surface of the shaping object.

12. The method according to claim 11, wherein in the calculating, the at least one of the three-dimensional surface texture parameters is calculated within an area in the shaping range, within which a difference of height value in an axial direction perpendicular to the surface of the shaping object exceeds a first threshold.

13. The method according to claim 11, wherein
in the acquiring, three-dimensional point group data of a surface of a powder bed where a material powder is spread is further acquired, and
in the calculating, the at least one of the three-dimensional surface texture parameters is calculated within an area in the shaping range, within which a difference of height value in an axial direction perpendicular to the surface of the powder bed exceeds a second threshold.

14. The method according to any one of claims 1 to 13, further comprising calculating an amount of subduction at a surface of a shaping region after being shaped,
wherein in the evaluating, the quality of the object to be shaped is evaluated based on the amount of subduction at the surface of the shaping region after being shaped.

15. An information processing apparatus comprising:
a data acquirer that acquires three-dimensional point group data of a surface of a shaping object;
a parameter calculator that calculates at least one of three-dimensional surface texture parameters extended to a plane region using the three-dimensional point group data in reduced dimension; and
an evaluator that evaluates a quality of the object to be shaped using the at least one of the three-dimensional surface texture parameters.

16. The information processing apparatus according to claim 15, further comprising a laser adjuster that instructs, in accordance with an evaluation result of said evaluator, adjustment for at least one of a laser power and a scan speed.

17. The information processing apparatus according to claim 16, wherein said laser adjuster instructs the adjustment for each laminating and shaping processing of one layer.

18. The information processing apparatus according to any one of claims 15 to 17, wherein the at least one of the three-dimensional surface texture parameters includes at least one of an autocorrelation length Sal of the surface, a mean dale area Sda of the surface, and a mean hill area Sha of the surface.

19. The information processing apparatus according to any one of claims 15 to 18, wherein the at least one of the three-dimensional surface texture parameters further includes one of a mean dale volume Sdv of the surface and a material ratio Smr2 of the surface for separating a dale portion and a core portion.

20. The information processing apparatus according to any one of claims 15 to 19, wherein the at least one of the three-dimensional surface texture parameters further includes a reduced dale height Svk of the surface, a core height Sk of the surface, a root mean square height Sq of the surface, a root mean square gradient Sdq of the surface, a peak extreme height Sxp of the surface, a core void volume Vvc of the surface, a dale void volume Vvv of the surface, a material volume Vm of the surface, a peak material volume Vmp of the surface, and a void volume Vv of the surface.

21. The information processing apparatus according to any one of claims 15 to 20, wherein said evaluator evaluates the quality of the object to be shaped using a combination of at least two of the three-dimensional surface texture parameters.

22. The information processing apparatus according to any one of claims 15 to 21, wherein
said parameter calculator further calculates at least one of a maximum height Sz and a maximum peak height Sp of a surface at each point of an entire shaping enable region, and
the apparatus further includes a shaping control instructor that sends a shaping stop instruction in a case in which the maximum peak height Sp of the surface exceeds a third threshold or in a case in which the maximum height Sz of the surface exceeds a fourth threshold.

23. An information processing program for causing a computer to execute a method, the method comprising:
acquiring three-dimensional point group data of a surface of a shaping obj ect;
calculating at least one of three-dimensional surface texture parameters extended to a plane region using the three-dimensional point group data in reduced dimension; and
evaluating a quality of an object to be shaped using the at least one of the three-dimensional surface texture parameters.

24. The information processing program according to claim 23, wherein the method further comprises instructing, in accordance with an evaluation result of the evaluating, adjustment for at least one of a laser power and a scan speed.

25. A laminating and shaping system comprising:
a laminating and shaping apparatus that creates an object by repeating to spread a material powder and irradiate a laser on the spread material powder,; and
an information processing apparatus that controls laminating and shaping of the object in the laminating and shaping apparatus,
the information processing apparatus including
a data acquirer that acquires three-dimensional point group data of a surface of a shaping object;
a parameter calculator that calculates at least one of three-dimensional surface texture parameters extended to a plane region using the three-dimensional point group data in reduced dimension;
an evaluator that evaluates a quality of the object to be shaped using the at least one of the three-dimensional surface texture parameters; and
a laser adjuster that instructs, in accordance with an evaluation result of said evaluator, adjustment for at least one of a laser power and a scan speed.
